# EUROPEAN PATENT APPLICATION

(11) **EP 4 848 786 A1**
(43) Date of publication of application: **02.12.2026**
(21) Application number: 24919988.6
(22) Date of filing: 24.12.2024
(51) Int. Cl.: H04W 24/04

(54) **PERFORMANCE MONITORING METHOD AND APPARATUS, DEVICE, AND STORAGE MEDIUM**

(30) Priority: 25.01.2024 CN 202410108832
(71) Applicant: Datang Mobile Communications Equipment Co., Ltd., Beijing 100085 (CN)
(72) Inventor: LI, Qianrui, Beijing 100085 (CN); HUANG, Qiuping, Beijing 100085 (CN); LUO, Yajuan, Beijing 100085 (CN)
(74) Representative: Studio Torta S.p.A.
(86) International application number: PCT/CN2024/142031
(87) International publication number: WO 2025/156910

(57) **Abstract**

The present disclosure provides a performance monitoring method and apparatus, a device and a storage medium, applied to a terminal device, relating to the field of communication technologies. The method includes: transmitting a performance monitoring request for an AI model to a network device according to a trigger event, receiving a response to the performance monitoring request transmitted by the network device, and performing performance monitoring on the AI model according to the response to the performance monitoring request, so as to save communication resources for model monitoring.

## Description

This disclosure claims priority to Chinese Patent Application No. 202410108832.9, filed with the China National Intellectual Property Administration on January 25, 2024 and entitled "PERFORMANCE MONITORING METHOD AND APPARATUS, DEVICE, AND STORAGE MEDIUM", the content of which is hereby incorporated by reference in its entirety.

### TECHNICAL FIELD

The present disclosure relates to the field of communication technologies, and in particular, to a performance monitoring method and apparatus, a device, and a storage medium.

### BACKGROUND

With the development of artificial intelligence (artificial intelligence, AI) technology and machine learning (Machine Learning, ML), an AI model and/or a ML model (hereinafter referred to as an AI model) can be used to improve performance of a communication system, where performance monitoring of the AI model is particularly important.

Currently, a base station can periodically transmit a reference signal related to the AI model to a terminal device, thereby periodically initiating performance monitoring of the AI model. However, for most of time, it is unnecessary to perform frequent performance monitoring on the AI model, as doing so would lead to a waste of communication resources.

### SUMMARY

The present disclosure provides a performance monitoring method and apparatus, a device, and a storage medium, which solves the technical problem of communication resource waste existing in performance monitoring of an AI model.

In a first aspect, the present disclosure provides a performance monitoring method, applied to a terminal device, including:
transmitting a performance monitoring request for an AI model to a network device according to a trigger event;
receiving a response to the performance monitoring request transmitted by the network device, and performing performance monitoring on the AI model according to the response to the performance monitoring request.

In some embodiments, the performance monitoring request includes an identifier of the AI model and/or an identifier of a function.

In some embodiments, the performance monitoring request includes an identifier indicating an applicable model, an identifier indicating an applicable function, and an identifier indicating an applicable scenario corresponding to the performance monitoring request.

In some embodiments, the performance monitoring request includes a start time of performance monitoring and/or an end time of performance monitoring.

In some embodiments, the performance monitoring request includes target information, where the target information is related to a performance metric of the AI model and/or a metric value of the AI model.

In some embodiments, the target information includes at least one of the following:
an intermediate key performance indicator related to the AI model;
an eventual key performance indicator related to the AI model;
statistical information of information related to channel state information CSI;
distribution information of information related to CSI;
reference signal received power related to the AI model;
reference signal received quality related to the AI model;
a signal to interference plus noise ratio;
speed information; or
location information.

In some embodiments, the trigger event includes a first event related to the AI model and/or a function, and a second event related to performance of the terminal device.

In some embodiments, when the AI model is not activated, not selected, or not paired, the first event includes at least one of the following:
transmitting an identifier of a supported AI model and/or an identifier of a supported function; or
receiving an identifier of an AI model and/or an identifier of a function supported by a cell currently covered by a base station.

In some embodiments, when the AI model is activated, selected, or paired, the first event is an event determined based on at least one of the following:
a measured eventual key performance indicator;
statistical information and/or distribution information of information related to measured CSI;
statistical information and/or distribution information of information related to CSI inferred by the AI model;
a generalization indicator of the AI model; or
update information and/or transfer information of the AI model.

In some embodiments, the first event is an event determined based on the measured eventual key performance indicator, and the first event includes at least one of the following:
a first parameter in the eventual key performance indicator being less than a threshold corresponding to the first parameter, where the first parameter is positively correlated with performance of the AI model;
a second parameter in the eventual key performance indicator being greater than a threshold corresponding to the second parameter, where the second parameter is negatively correlated with performance of the AI model;
a number of times a first parameter in the eventual key performance indicator is less than a threshold corresponding to the first parameter within a first duration being greater than a first threshold;
a number of times a second parameter in the eventual key performance indicator is greater than a threshold corresponding to the second parameter within a first duration being greater than a first threshold; or
a deviation between a parameter in the eventual key performance indicator and a first target value being greater than a second threshold, where the first target value is a target value corresponding to the parameter in the eventual key performance indicator.

In some embodiments, the first event is an event determined based on the statistical information and/or distribution information of information related to measured CSI, and the first event includes at least one of the following:
a third parameter in the statistical information and/or distribution information of information related to measured CSI being greater than a threshold corresponding to the third parameter, where the third parameter is negatively correlated with performance of the AI model;
a fourth parameter in the statistical information and/or distribution information of information related to measured CSI being less than a threshold corresponding to the fourth parameter, where the fourth parameter is positively correlated with performance of the AI model;
a number of times a third parameter in the statistical information and/or distribution information of information related to measured CSI is greater than a threshold corresponding to the third parameter within a second duration being greater than a third threshold;
a number of times a fourth parameter in the statistical information and/or distribution information of information related to measured CSI is less than a threshold corresponding to the fourth parameter within a second duration being greater than a third threshold; or
a deviation between a parameter in the statistical information and/or distribution information of information related to measured CSI and a second target value being greater than a fourth threshold, where the second target value is a target value corresponding to the parameter in the statistical information and/or distribution information of information related to measured CSI.

In some embodiments, the first event is an event determined based on the statistical information and/or distribution information of information related to CSI inferred by the AI model, and the first event includes at least one of the following:
a fifth parameter in the statistical information and/or distribution information of information related to inferred CSI being greater than a threshold corresponding to the fifth parameter, where the fifth parameter is negatively correlated with performance of the AI model;
a sixth parameter in the statistical information and/or distribution information of information related to inferred CSI being less than a threshold corresponding to the sixth parameter, where the sixth parameter is positively correlated with performance of the AI model;
a number of times a fifth parameter in the statistical information and/or distribution information of information related to inferred CSI is greater than a threshold corresponding to the fifth parameter within a third duration being greater than a fifth threshold;
a number of times a sixth parameter in the statistical information and/or distribution information of information related to inferred CSI is less than a threshold corresponding to the sixth parameter within a third duration being greater than a fifth threshold; or
a deviation between a parameter in the statistical information and/or distribution information of information related to inferred CSI and a third target value being greater than a sixth threshold, where the third target value is a target value corresponding to the parameter in the statistical information and/or distribution information of information related to inferred CSI.

In some embodiments, the first event is an event determined based on the generalization indicator of the AI model, and the first event includes at least one of the following:
a duration in which a parameter in a performance indicator of a received reference signal is less than a seventh threshold being greater than an eighth threshold;
a number of times a parameter in a performance indicator of a received reference signal is less than a seventh threshold within a fourth duration being greater than a ninth threshold;
quasi-co-location information of a received reference signal changing;
a dataset label of information related to measured CSI changing;
a duration in which a parameter in measured speed information is greater than a tenth threshold being greater than an eleventh threshold;
a number of times a parameter in measured speed information is greater than a tenth threshold within a fifth duration being greater than a twelfth threshold;
a distance difference between two positions measured at an interval of a sixth duration being greater than a thirteenth threshold; or
an operating center frequency, a subcarrier, and/or a bandwidth configuration changing.

In some embodiments, the first event is an event determined based on the update information and/or model transfer information of the AI model, and the first event includes at least one of the following:
receiving model update information and/or model transfer information transmitted by the network device; or
not receiving an indication related to performance monitoring within a seventh duration after receiving the model update information and/or the model transfer information transmitted by the network device.

In some embodiments, the second event is an event determined based on upper layer signaling, and the second event includes at least one of the following:
a handover of a cell where the terminal device is located occurring;
a first monitoring quantity being greater than a fourteenth threshold, where the first monitoring quantity is negatively correlated with the performance of the terminal device;
a second monitoring quantity being less than a fifteenth threshold, where the second monitoring quantity is positively correlated with the performance of the terminal device;
a first parameter of an eventual key performance indicator at a future time predicted based on an eventual key performance indicator at a current time being less than a threshold corresponding to the first parameter; or
a second parameter of an eventual key performance indicator at a future time predicted based on an eventual key performance indicator at a current time being greater than a threshold corresponding to the second parameter.

In some embodiments, the threshold, duration, and target value are obtained based on a protocol pre-definition and/or a network side configuration and/or a combination of a protocol pre-definition and a network side configuration.

In some embodiments, the information related to CSI includes CSI information, beam information, and positioning information.

In some embodiments, the response to the performance monitoring request includes a reply or an indication of the performance monitoring request.

In some embodiments, the transmitting the performance monitoring request for the AI model to the network device includes:
transmitting the performance monitoring request to the network device based on a scheduling request SR in uplink control information UCI; or
transmitting the performance monitoring request to the network device based on medium access control control element MAC-CE signaling; or
transmitting the performance monitoring request to the network device based on a reserved periodic physical uplink control channel PUCCH resource or physical uplink shared channel PUSCH resource.

In a second aspect, the present disclosure provides another performance monitoring method, applied to a network device, and the method includes:
receiving a performance monitoring request for an AI model transmitted by a terminal device, where the performance monitoring request is determined by the terminal device based on a trigger event; and
transmitting a response to the performance monitoring request to the terminal device.

In some embodiments, the transmitting the response to the performance monitoring request to the terminal device includes:
determining, according to information carried in the performance monitoring request, whether performance monitoring is required for the AI model, to obtain a determination result; and
transmitting the response to the performance monitoring request to the terminal device according to the determination result.

In some embodiments, the transmitting the response to the performance monitoring request to the terminal device includes:
receiving a scheduling request SR transmitted by the terminal device; and
transmitting a response to the scheduling request SR to the terminal device, where the response to the scheduling request SR includes downlink control information DCI for uplink transmission resource allocation, and the DCI is scrambled based on a radio network temporary identifier RNTI of the terminal device.

In a third aspect, the present disclosure provides a performance monitoring apparatus, applied to a terminal device, the performance monitoring apparatus includes a transmitting module, a receiving module, and a monitoring module, where:
the transmitting module is configured to transmit a performance monitoring request for an AI model to a network device according to a trigger event;
the receiving module is configured to receive a response to the performance monitoring request from the network device;
the monitoring module is configured to perform performance monitoring on the AI model according to the response to the performance monitoring request.

In a fourth aspect, the present disclosure provides another performance monitoring apparatus, applied to a network device, the performance monitoring apparatus includes a receiving module and a transmitting module, where:
the receiving module is configured to receive a performance monitoring request for an AI model transmitted by a terminal device, where the performance monitoring request is determined by the terminal device based on a trigger event; and
the transmitting module is configured to transmit a response to the performance monitoring request to the terminal device.

In a fifth aspect, the present disclosure provides a terminal device, including a memory, a transceiver, and a processor:
the memory is configured to store a computer program;
the transceiver is configured to transceive data under control of the processor;
the processor is configured to read the computer program in the memory and execute the following operations:
   transmitting a performance monitoring request for an AI model to a network device according to a trigger event; and
   receiving a response to the performance monitoring request transmitted by the network device, and performing performance monitoring on the AI model according to the response to the performance monitoring request.

In a sixth aspect, the present disclosure provides a network device, including a memory, a transceiver, and a processor:
the memory is configured to store a computer program;
the transceiver is configured to transceive data under control of the processor;
the processor is configured to read the computer program in the memory and execute the following operations:
   receiving a performance monitoring request for an AI model transmitted by a terminal device, where the performance monitoring request is determined by the terminal device based on a trigger event; and
   transmitting a response to the performance monitoring request to the terminal device.

In a seventh aspect, the present disclosure provides a processor-readable storage medium, where the processor-readable storage medium stores a computer program, and the computer program is used for causing a processor to perform the method according to the first aspect, or to perform the method according to the second aspect.

The present disclosure provides a performance monitoring method and apparatus, a device and a storage medium. In the method, a terminal device may transmit a performance monitoring request for an AI model to a network device according to a trigger event, receive a response to the performance monitoring request transmitted by the network device, and perform performance monitoring on the AI model according to the response to the performance monitoring request. In the above method, since the performance monitoring of the AI model can be initiated by the terminal device based on the trigger event, and the trigger event can be associated with performance of the AI model, the terminal device can avoid frequently (periodically or semi-periodically) initiating performance monitoring of the AI model, thereby reducing communication resources required for monitoring the AI model. Meanwhile, when event(s) such as AI model failure, AI model performance degradation and the like occur, the terminal device can timely initiate the performance monitoring of the AI model, thereby improving timeliness of the performance monitoring of the AI model, and further enhancing stability of communication. This method can also be used in combination with method(s) for initiating aperiodic, periodic or semi-periodic model monitoring, so as to realize fast and flexible performance monitoring of the AI model according to available communication resources in the system.

It should be understood that the content described in the above summary section is not intended to identify key or important features of the embodiments of the present disclosure, nor is it intended to limit the scope of the present disclosure. Other features of the present disclosure will become readily understood from the following description.

### BRIEF DESCRIPTION OF DRAWINGS

To more clearly illustrate technical solutions of the present disclosure or in the related art, a brief introduction to accompanying drawings required for describing embodiments or the related art will be provided below. It is evident that the accompanying drawings described below are some embodiments of the present invention, and for a person of ordinary skill in the art, other accompanying drawings can be obtained based on these accompanying drawings without creative efforts.
FIG. 1 is a schematic diagram of a communication scenario provided by an embodiment of the present disclosure.
FIG. 2 is a flowchart of a performance monitoring method provided by an embodiment of the present disclosure.
FIG. 3 is a schematic diagram of a performance monitoring method for an AI model provided by an embodiment of the present disclosure.
FIG. 4 is a schematic diagram of another performance monitoring method for an AI model provided by an embodiment of the present disclosure.
FIG. 5 is a schematic diagram of another performance monitoring method for an AI model provided by an embodiment of the present disclosure.
FIG. 6 is a schematic diagram of a method for triggering a first event provided by an embodiment of the present disclosure.
FIG. 7 is a schematic diagram of another method for triggering a first event provided by an embodiment of the present disclosure.
FIG. 8 is a schematic diagram of a method for transmitting a monitoring request provided by an embodiment of the present disclosure.
FIG. 9 is a schematic diagram of another method for transmitting a monitoring request provided by an embodiment of the present disclosure.
FIG. 10 is a schematic diagram of another method for transmitting a monitoring request provided by an embodiment of the present disclosure.
FIG. 11 is a schematic diagram of another method for transmitting a monitoring request provided by an embodiment of the present disclosure.
FIG. 12 is a schematic diagram of another method for transmitting a monitoring request provided by an embodiment of the present disclosure.
FIG. 13 is a schematic diagram of a method for transmitting a monitoring request provided by an embodiment of the present disclosure.
FIG. 14 is a schematic diagram of a method for transmitting a response to a monitoring request to a terminal device provided by an embodiment of the present disclosure.
FIG. 15 is a schematic structural diagram of a performance monitoring apparatus provided by an embodiment of the present disclosure.
FIG. 16 is a schematic structural diagram of another performance monitoring apparatus provided by an embodiment of the present disclosure.
FIG. 17 is a schematic structural diagram of a terminal device provided by an embodiment of the present disclosure.
FIG. 18 is a schematic structural diagram of a network device provided by an embodiment of the present disclosure.

### DESCRIPTION OF EMBODIMENTS

A term "and/or" in embodiments of the present disclosure describes an association relationship of associated objects, and indicates that there may be three relationships. For example, A and/or B may indicate three situations: presence of A only, presence of both A and B, and presence of B only. A character "/" herein generally indicates that the associated objects before and after are in an "or" relationship.

A term "a plurality of" in the embodiments of the present disclosure refers to two or more than two, and other quantifiers are similar.

The technical solutions in the embodiments of the present disclosure will be described as follows clearly and comprehensively in conjunction with accompanying drawings in the embodiments of the present disclosure. Apparently, the described embodiments are merely a part of the embodiments of the present disclosure, rather than all of the embodiments. Based on the embodiments of the present disclosure, all other embodiments obtained by those of ordinary skill in the art without creative efforts shall fall within the protection scope of the present disclosure.

The embodiments of the present disclosure provide a performance monitoring method and apparatus, a device, and a storage medium. A terminal device can initiate monitoring of an AI model according to a trigger event, so that a network device does not need to frequently initiate performance monitoring for the AI model, thereby reducing the consumption of communication resources and improving the timeliness of performance monitoring of the AI model.

The method and the apparatus are based on the same application concept. Since the method and the apparatus solve the problem with similar principles, reference can be made to each other for implementations of the apparatus and the method, and repeated descriptions are omitted.

The technical solutions provided by the embodiments of the present disclosure can be applied to various systems. For example, an applicable system can be: a long term evolution (long term evolution, LTE) system, an LTE frequency division duplex (frequency division duplex, FDD) system, an LTE time division duplex (time division duplex, TDD) system, a long term evolution advanced (long term evolution advanced, LTE-A) system, a universal mobile telecommunication system (universal mobile telecommunication system, UMTS), a worldwide interoperability for microwave access (worldwide interoperability for microwave access, WiMAX) system, a 5G new radio (New Radio, NR) system and evolved communication systems thereof, etc. These various systems all include terminal device(s) and network device(s). The system may also include a core network component, such as an evolved packet system (Evolved Packet Core, EPC), a 5G core network (5GC), etc.

The terminal device involved in the embodiments of the present disclosure may be a device that provides voice and/or data connectivity to a user, a handheld device with a wireless connection function, or other processing devices connected to a wireless modem, etc. Names of the terminal device may also vary in different systems. For example, in a 5G system, the terminal device may be called user equipment (User Equipment, UE). A wireless terminal device may be a USB storage device, other personal computer memory devices and dongles, and may also communicate with one or more core networks (Core Network, CNs) via a radio access network (Radio Access Network, RAN). The wireless terminal may be a mobile terminal device, such as a mobile phone (or called a "cellular" phone) and a computer with a mobile terminal, for example, may be a portable, pocket-sized, handheld, computer built-in, or vehicle-mounted mobile apparatus, that exchanges language and/or data with the radio access network, for example, a personal communication service (Personal Communications Service, PCS) phone, a cordless phone, a session initiated protocol (Session Initiated Protocol, SIP) phone, a wireless local loop (Wireless Local Loop, WLL) station, a personal digital assistant (Personal Digital Assistant, PDA), a personal computer, a tablet computer, a machine-type communication (Machine-type Communication, MTC) terminal device and the like. The wireless terminal device can also be called a system, a subscriber unit (subscriber unit), a subscriber station (subscriber station), a mobile station (mobile station), a mobile (mobile), a remote station (remote station), an access point (access point), a remote terminal device (remote terminal), an access terminal device (access terminal), a user terminal device (user terminal), a user agent (user agent), and a user device (user device), and a wireless accessor and a router/modem that meet the definition and limitations herein, etc., which are not limited in the embodiments of the present disclosure.

The network device involved in the embodiments of the present disclosure may be a base station, and the base station may include a plurality of cells providing services to the terminal. According to different specific application scenarios, the base station can also be called as an access point, or may be a device in the access network that communicates with the wireless terminal device through one or more sectors on an air interface, or other names. The network device may be used to interchange a received air frame with an Internet protocol (Internet Protocol, IP) packet, and may act as a router between the wireless terminal device and the rest of the access network, where the rest of the access network may include an Internet protocol (IP) communication network. The network device may also coordinate the management of attributes of the air interface. For example, the network device involved in the embodiments of the present disclosure may be an evolutional network device (evolutional Node B, eNB or e-NodeB) in a long term evolution (long term evolution, LTE) system, or a 5G base station (gNB) in a 5G network architecture (next generation system), etc., and may also be a home evolved base station (Home evolved Node B, HeNB), a relay node (relay node), a femto (femto), a pico (pico), a network test device, etc., which are not limited in the embodiments of the present disclosure. In some network structures, the network device may include a centralized unit (centralized unit, CU) node and a distributed unit (distributed unit, DU) node, and the centralized unit and the distributed unit may also be geographically separated.

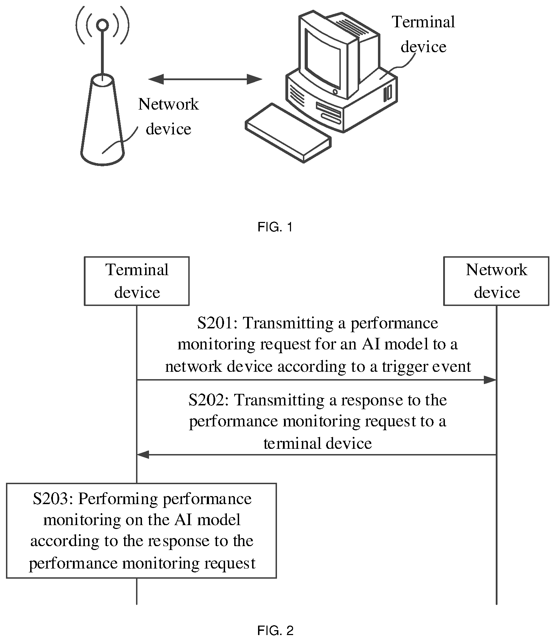

Next, with reference to FIG. 1, a communication scenario of the present disclosure will be described.

FIG. 1 is a schematic diagram of a communication scenario provided by an embodiment of the present disclosure. Please refer to FIG. 1, which includes a terminal device and a network device, and both the terminal device and the network device can serve as AI model users. When a use scenario of an AI model is different from its training scenario, it is necessary to monitor the performance of the AI model to determine whether the AI model is applicable in a current scenario. A monitoring party of the AI model can perform life cycle management (LCM, Life Cycle Management) operations related to the AI model based on a result of the performance monitoring of the AI model. For example, when a current AI model is invalid, the monitoring party of the AI model can perform operations such as model deactivation, model switching, model fallback, and model update, thereby ensuring the stability of communication.

Currently, the network device can transmit a reference signal related to the AI model to the terminal device, thereby initiating performance monitoring of the AI model. For example, the AI model is a model for processing channel state information (Channel State Information, CSI). The network device can transmit a reference signal related to CSI to the terminal device aperiodically, periodically, or semi-periodically. The terminal device can measure ground-truth CSI based on the reference signal, and process (compress, recover) the ground-truth CSI through the AI model, then perform performance monitoring on a current AI model based on the ground-truth CSI and CSI output by the AI model. However, in most time periods, the performance of the AI model is relatively stable. Therefore, it is unnecessary to perform frequent performance monitoring on the AI model, as doing so would lead to a waste of communication resources. Moreover, when a sudden event occurs (such as AI model failure, AI model performance degradation), the network device cannot timely initiate performance monitoring of the AI model, which leads to lower communication stability.

In order to solve the technical problems in related art, the embodiments of the present disclosure provide a performance monitoring method. A terminal device can transmit a performance monitoring request for an AI model to a network device according to a trigger event, where the performance monitoring request may include an identifier of the AI model and/or an identifier of a function, and the trigger event may include an event related to the AI model and/or the function, and an event related to performance of the terminal device. The terminal device can receive a response to the performance monitoring request from the network device, and perform performance monitoring on the AI model according to the response to the performance monitoring request. In this way, since the trigger event is related to the AI model and/or the function, the terminal device can timely initiate performance monitoring of the AI model when the AI model fails or the performance of the AI model degrades, thereby ensuring the stability of communication quality. Moreover, since the terminal device can initiate performance monitoring of the AI model based on the trigger event, it does not need the network device to frequently (periodically or semi-periodically) initiate performance monitoring of the AI model, thereby saving communication resources.

Next, with reference to the embodiments, the performance monitoring method provided by the present disclosure will be described in detail.

FIG. 2 is a flowchart of a performance monitoring method provided by an embodiment of the present disclosure. Please refer to FIG. 2, the method flow includes the following.

S201, a terminal device transmits a performance monitoring request for an AI model to a network device according to a trigger event.

Here, the trigger event may be used to trigger the terminal device to transmit the performance monitoring request for the AI model to the network device. For example, when the terminal device monitors that the trigger event has occurred, the terminal device may transmit the performance monitoring request for the AI model to the network device.

Here, the trigger event may include a first event related to the AI model and/or a function, and a second event related to performance of the terminal device. For example, if user throughput is less than a preset throughput, this event may be the first event; if a block error rate is greater than a preset block error rate, this event may be the first event. Among them, the first event may be any event related to the AI model and/or the function, which is not limited in the embodiments of the present disclosure. For example, if power consumption of the terminal device rises, this event may be the second event; if remaining computing power of the terminal device is less than a preset computing power, this event may be the second event. Among them, the second event may be any event related to the performance of the terminal device, which is not limited in the embodiments of the present disclosure.

In some embodiments, the AI model may be a model for processing CSI information, the AI model may be a model for processing beam information, or the AI model may be a model for processing positioning information, which is not limited in the embodiments of the present disclosure.

Here, the performance monitoring request may be used to request performance monitoring of the AI model. For example, the performance monitoring request may request performance monitoring of the AI model, and the monitoring request may also trigger activation of the performance monitoring of the AI model. The performance monitoring (performance monitoring) may include model based monitoring (model based performance monitoring, i.e., performance monitoring) and function (the function may be a function of the AI model, or may be an AI function in communication, which is not limited in the embodiments of the present disclosure) based (functionality based) monitoring. The terminal device can perform life cycle management on the AI model based on a result of the performance monitoring.

Here, the performance monitoring request may include an identifier of the AI model and/or an identifier of the function. For example, the performance monitoring request may include an Identity ID of the AI model, the performance monitoring request may include an ID of the function, or the performance monitoring request may include both the ID of the AI model and the ID of the function, which is not limited in the embodiments of the present disclosure.

For example, if the performance monitoring request transmitted by the terminal device to the network device includes an identifier of AI model 1, the terminal device requests to perform performance monitoring on the AI model 1. If the performance monitoring request transmitted by the terminal device to the network device includes an identifier of AI model 2, the terminal device requests to perform performance monitoring on the AI model 2. For example, if the performance monitoring request transmitted by the terminal device to the network device includes an identifier of function A, the terminal device requests to perform performance monitoring on the function A. If the monitoring request transmitted by the terminal device to the network device includes an identifier of function B, the terminal device requests to perform performance monitoring on the function B. In this way, the terminal device can accurately perform performance monitoring on the AI model and/or the function.

In some embodiments, the performance monitoring request may include an identifier indicating an applicable model, an identifier indicating an applicable function, and an identifier indicating an applicable scenario corresponding to the performance monitoring request. For example, the performance monitoring request may include an identifier indicating a function of an AI model corresponding to the performance monitoring request, and an identifier indicating an applicable scenario corresponding to the performance monitoring request.

In some embodiments, the performance monitoring request may include a start time of performance monitoring and/or an end time of performance monitoring. For example, the performance monitoring request may include a start time of performance monitoring, the performance monitoring request may also include an end time of performance monitoring, and the performance monitoring request may further include both a start time and an end time of performance monitoring. For example, if the performance monitoring request includes a start time of performance monitoring, the terminal device may initiate performance monitoring of the AI model at the start time; if the performance monitoring request includes an end time of performance monitoring, the terminal device may stop performance monitoring of the AI model at the end time; if the performance monitoring request includes both a start time and an end time of performance monitoring, the terminal device may perform performance monitoring on the AI model during a time period between the start time and the end time. In this way, the terminal device can flexibly perform performance monitoring on the AI model.

It should be noted that if the performance monitoring request does not include a start time of performance monitoring, when receiving the performance monitoring request, the network device can execute a performance monitoring process for the AI model (the AI model performance monitoring process starts from the network device transmitting the reference signal related to the AI model. However, in the present disclosure, initiation of the AI model performance monitoring process is determined by the performance monitoring request transmitted by the terminal device).

It should be noted that if the performance monitoring request does not include an end time of performance monitoring, the terminal device may stop performance monitoring after initiating performance monitoring for a preset duration, or the terminal device may stop performance monitoring at any time, which is not limited in the embodiments of the present disclosure.

It should be noted that the start time and the end time in the embodiments of the present disclosure may be absolute times or offset times, which is not limited in the embodiments of the present disclosure.

In some embodiments, the performance monitoring request may include target information. The target information may be related to a performance metric of the AI model and/or a metric value of the AI model. In some embodiments, the target information may include at least one of the following: an intermediate key performance indicator related to the AI model, an eventual key performance indicator related to the AI model, statistical information of information related to channel state information CSI, distribution information of information related to CSI, speed information, or location information.

Among them, the intermediate (Intermediate) key performance indicator (Key Performance Indicator, KPI) related to the AI model can indicate the performance of the AI model. For example, if the AI model is a model for processing CSI, the terminal device can obtain ground-truth CSI, perform compression and recovery processing on the ground-truth CSI based on the AI model to obtain predicted CSI, and the terminal device can calculate an intermediate KPI of the AI model based on the ground-truth CSI and the predicted CSI (performance metric calculation), and determine the inference accuracy and precision of the AI model according to the intermediate KPI.

The eventual key performance indicator (Eventual KPI) related to the AI model can be used to indicate the performance of the AI model. For example, the eventual KPI may include parameters such as throughput, hypothetical throughput (hypothetical throughput), hypothetical block error rate (hypothetical BLER), and block error rate. The above parameters can accurately reflect the quality of the communication system, and the terminal device can determine the performance of the AI model based on the quality of the communication system. For example, if the throughput is low, it indicates that the quality of the current communication system is poor and the performance of the AI model is low.

The information related to channel state information CSI may include CSI information, beam information, and positioning information, and the information related to CSI may also include any information that can affect CSI, which is not limited in the embodiments of the present disclosure.

The statistical information of information related to CSI may include average delay, delay spread, Doppler shift, Doppler spread, etc. The distribution information related to CSI may include LOS (Line-of-Sight) distribution, NLOS (Non-Line-of-Sight) distribution, etc., which is not limited in the embodiments of the present disclosure.

Reference signal received power (Reference Signal Received Power, RSRP) related to the AI model may be power strength of a reference signal received by the terminal device. For example, RSRP can measure the signal strength of the terminal device or the cell. For example, if the AI model is a model for processing CSI, the reference signal may be a reference signal related to CSI; if the AI model is a model for processing beam information, the reference signal may be a reference signal related to beam; if the AI model is a model for processing positioning information, the reference signal may be a reference signal related to positioning.

Reference signal received quality (Reference Signal Received Quality, RSRQ) related to the AI model may be quality of the reference signal received by the terminal device. For example, the terminal device can determine the quality of the signal based on RSRQ.

Signal to interference plus noise ratio (Signal to Interference plus Noise Ratio, SINR) may be a ratio of strength of a received useful signal to strength of a received interference signal (noise plus interference). For example, the terminal device can accurately determine the impact of interference other than noise on the signal based on SINR.

The speed information may include an absolute value of a linear velocity, an absolute value of an angular velocity, a linear acceleration, and an angular acceleration of the terminal device, and the speed information may include any information related to the speed of the terminal device, which is not limited in the embodiments of the present disclosure.

The location information may be information related to a location of the terminal device. For example, the location information may be a current location of the terminal device, or a location difference between two locations measured by the terminal device within a certain period of time, which is not limited in the embodiments of the present disclosure.

It should be noted that the above performance metrics and metric values of the target information may be filtered (filtered) at L1 (Layer 1) or L3 (Layer 3), which is not limited in the embodiments of the present disclosure.

In this way, when the performance monitoring request for the AI model includes the target information, the network device can determine whether to initiate performance monitoring of the AI model according to the target information. Although a determination of whether to initiate performance monitoring of the AI model is made by the network device, the initiation of this determination is made by the performance monitoring request transmitted by the terminal device. Therefore, the network device does not need to frequently initiate performance monitoring of the AI model, thereby saving communication resources.

In some embodiments, the terminal device may transmit the performance monitoring request for the AI model to the network device according to the following three feasible implementations.

A feasible implementation:
transmitting the performance monitoring request to the network device based on a scheduling request (Scheduling Request, SR) of uplink control information (Uplink Control Information, UCI). For example, the terminal device reports using UCI, and the terminal device can transmit an SR, and physical uplink shared channel (Physical Uplink Shared Channel, PUSCH) information required for uplink transmission (e.g., the number of reporting quantities).

Another feasible implementation:
transmitting the performance monitoring request to the network device based on medium access control control element (Medium Access Control Control Element, MAC-CE) signaling. For example, the terminal device may transmit the performance monitoring request using the MAC-CE signaling, and the MAC-CE signaling may also include the target information.

Yet another feasible implementation:
transmitting the performance monitoring request to the network device based on a reserved periodic physical uplink control channel (Physical Uplink Control Channel, PUCCH) resource or PUSCH resource. For example, the terminal device may report the performance monitoring request in the reserved periodic PUCCH resource or PUSCH resource based on a L1 resource pre-configuration.

S202, the network device transmits a response to the performance monitoring request to the terminal device.

After receiving the performance monitoring request transmitted by the terminal device, the network device may respond to the performance monitoring request. In some embodiments, the response to the performance monitoring request may include a reply or an indication for the monitoring request. For example, the response to the performance monitoring request may include agreeing to initiate and/or agreeing to activate the performance monitoring of the AI model, and the response to the performance monitoring request may include refusing to initiate and/or refusing to activate the performance monitoring of the AI model.

After determining the response to the monitoring request, the network device may transmit the response to the monitoring request to the terminal device.

The network device may transmit the response to the performance monitoring request to the terminal device according to the following feasible implementation: receiving a scheduling request SR transmitted by the terminal device, and transmitting a response to the scheduling request SR to the terminal device.

The response to the scheduling request SR includes downlink control information (Downlink Control Information, DCI) for uplink transmission resource allocation, and the downlink control information DCI is scrambled based on a radio network temporary identifier (Radio Network Temporary Identifier, RNTI) of the terminal device. For example, when the terminal device transmits the performance monitoring request for the AI model to the network device based on the scheduling request SR of the UCI, the terminal device may transmit the SR on a PUCCH or a random access channel (Random Access Channel, RACH). After receiving the SR, the network device may transmit an uplink grant as a response to the scheduling request SR, where the uplink grant may include DCI for uplink transmission resource allocation, and the DCI may be scrambled based on the RNTI (to distinguish network-side DCI responses to uplink transmission scheduling requests of other UEs, the RNTI of the terminal device may be a newly defined dedicated RNTI) of the terminal device. If the terminal device receives the same RNTI and the DCI can be descrambled, the terminal device can determine that the network device has received the performance monitoring request sent by the terminal device.

In some embodiments, when the terminal device transmits the AI model performance monitoring request based on the MAC-CE, the response information of the network device is a DCI format scheduling PUSCH transmission. Such DCI format may include the same hybrid automatic repeat request (Hybrid Automatic Repeat Request, HARQ) process number (process number) as that of the PUSCH carrying the MAC-CE for transmitting the performance monitoring request by the terminal device, and a flipped network device interface (network device interface, NDI) field. When detecting this DCI, the terminal device determines that the network device has received the monitoring request. For example, the NDI field may be a 1-bit indication field. If the NDI field is flipped (from 0 to 1, or from 1 to 0), it indicates that data transmission is a new transmission rather than a retransmission. For example, the DCI responded by a base station may be a DCI format scheduling PUSCH transmission, where a HARQ process ID of a newly scheduled PUSCH differs from that of the previous PUSCH used by the terminal device to transmit the MAC-CE (the HARQ process ID can be incremented). Therefore, if the terminal device detects that the DCI has the same HARQ process ID as the previous PUSCH used for transmitting the MAC-CE, it indicates that the DIC responded by the base station corresponds to the MAC-CE transmitted by the terminal device.

S203, the terminal device performs performance monitoring on the AI model according to the response to the performance monitoring request.

The terminal device may receive the response to the performance monitoring request transmitted by the network device, and perform performance monitoring on the AI model according to the response to the performance monitoring request. For example, if the response to the performance monitoring request is to agree to initiate performance monitoring, the terminal device may receive a reference signal for the AI model transmitted by the network device, and thereby perform performance monitoring on the AI model. If the response to the monitoring request is to refuse to initiate performance monitoring, the terminal device may stop initiating performance monitoring, or may continue to transmit the performance monitoring request to the network device, which is not limited in the embodiments of the present disclosure.

In some embodiments, after the terminal device transmits the performance monitoring request for the AI model to the network device, if the terminal device does not receive the response to the performance monitoring request within a certain duration, the terminal device may retransmit the performance monitoring request to the network device. The performance monitoring request may be a newly generated performance monitoring request, or may be a previously generated performance monitoring request, which is not limited in the embodiments of the present disclosure. For example, after transmitting the performance monitoring request to the network device, if the terminal device does not receive the response to the performance monitoring request within 10 seconds, the terminal device may retransmit the performance monitoring request to the network device.

In some embodiments, after the terminal device transmits the performance monitoring request to the network device multiple times, if the terminal device still does not receive the response to the performance monitoring request, the terminal device may transmit the performance monitoring for the AI model to the network device according to the trigger event. For example, after transmitting the performance monitoring request to the network device 3 times, if the terminal device still has not received the response to the performance monitoring request, the terminal device may regenerate a performance monitoring request according to the trigger event (this monitoring request may include more target information, etc.), and transmit this performance monitoring request to the network device. In this way, the accuracy and timeliness of performance monitoring on the AI model can be improved.

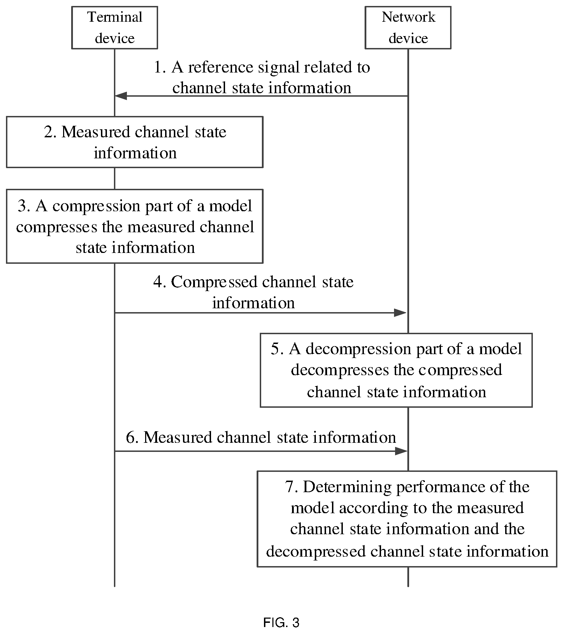

Next, with reference to FIG. 3 to FIG. 5, a process of the terminal device performing performance monitoring on the AI model will be described, where the AI model is a model for processing CSI.

FIG. 3 is a schematic diagram of a performance monitoring method for an AI model provided by an embodiment of the present disclosure. In the embodiment shown in FIG. 3, a CSI compression part of a model is deployed at a terminal device, and a CSI decompression part of the model is deployed at a network device, and the network device performs the performance monitoring on the AI model. Referring to FIG. 3, it includes a terminal device and a network device. When the terminal device initiates performance monitoring of an AI model, the network device can transmit a reference signal related to channel state information to the terminal device. The terminal device can obtain measured channel state information according to the reference signal, and the terminal device can compress the measured channel state information according to a compression part of the model.

Please refer to FIG. 3, the terminal device can transmit compressed channel state information to the network device, and the network device can decompress the compressed channel state information based on a decompression part of the model to obtain decompressed channel state information. The terminal device may also transmit the measured channel state information to the network device, and the network device can determine a performance of the model based on the measured channel state information and the decompressed channel state information. In this way, the network device can calculate an intermediate KPI according to the measured CSI and the decompressed CSI, and then determine the performance of the AI model according to the intermediate KPI, thereby improving the accuracy of model performance monitoring.

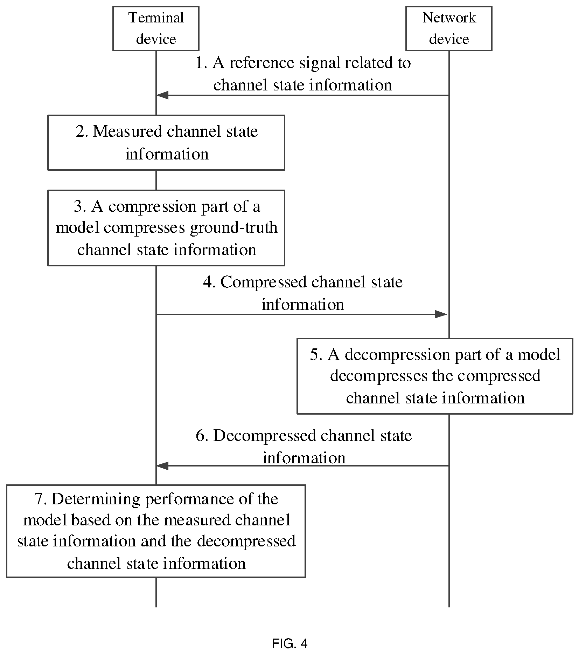

FIG. 4 is a schematic diagram of another performance monitoring method for an AI model provided by an embodiment of the present disclosure. In the embodiment shown in FIG. 4, a CSI compression part of a model is deployed at a terminal device, and a CSI decompression part of the model is deployed at a network device, and the terminal device performs the performance monitoring on the AI model. Referring to FIG. 4, it includes a terminal device and a network device. When the terminal device initiates performance monitoring of an AI model, the network device can transmit a reference signal related to channel state information to the terminal device. The terminal device can obtain measured channel state information according to the reference signal, and the terminal device can compress the measured channel state information according to a compression part of the model.

Please refer to FIG. 4, the terminal device can transmit compressed channel state information to the network device, and the network device can decompress the compressed channel state information based on a decompression part of the model to obtain decompressed channel state information. The network device can transmit the decompressed channel state information to the terminal device, and the terminal device can determine a performance of the model based on the measured channel state information and the decompressed channel state information. In this way, the terminal device can calculate an intermediate KPI based on the measured CSI and the decompressed CSI, and then determine the performance of the AI model according to the intermediate KPI, thereby improving the accuracy of model performance monitoring.

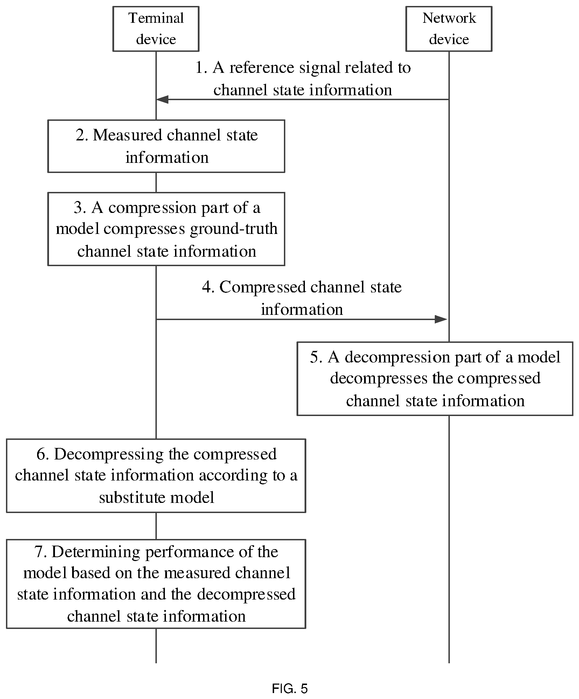

FIG. 5 is a schematic diagram of another performance monitoring method for an AI model provided by an embodiment of the present disclosure. In the embodiment shown in FIG. 5, a CSI compression part of a model is deployed at a terminal device, and a CSI decompression part of the model is deployed at a network device, and the terminal device performs the monitoring on the AI model. The terminal device further includes a substitute model of the CSI decompression part of the model. Referring to FIG. 5, it includes a terminal device and a network device. When the terminal device initiates performance monitoring of an AI model, the network device can transmit a reference signal related to channel state information to the terminal device. The terminal device can obtain measured channel state information according to the reference signal, and the terminal device can compress the measured channel state information according to a compression part of the model.

Please refer to FIG. 5, the terminal device can transmit compressed channel state information to the network device, and the network device can decompress the compressed channel state information based on a decompression part of the model to obtain decompressed channel state information. The terminal device can decompress the compressed channel state information according to the substitute model, and determine a performance of the model based on the measured channel state information and the decompressed channel state information. In this way, the terminal device can calculate an intermediate KPI based on the measured CSI and the decompressed CSI, and then determine the performance of the AI model according to the intermediate KPI, thereby improving the accuracy of model performance monitoring.

It should be noted that in the embodiments shown in FIG. 3 to FIG. 5, the sequence numbers 1, 2, ..., 7 are only for describing the steps and do not limit the order of execution of the steps.

The present disclosure provides a performance monitoring method. A terminal device can transmit a performance monitoring request for an AI model to a network device according to a trigger event, where the trigger event may include a first event related to the AI model and/or a function, and a second event related to performance of the terminal device. The monitoring request may include an identifier of the AI model, an identifier of a function of the AI model, a start time of performance monitoring, an end time of performance monitoring, and target information related to performance metrics and metric values of the AI model. The terminal device can receive a response to the performance monitoring request from the network device, and perform performance monitoring on the AI model according to the response to the performance monitoring request. In this way, since the terminal device can initiate the performance monitoring process, it does not need the network device to frequently (periodically or semi-periodically) initiate performance monitoring of the AI model, thereby saving communication resources.

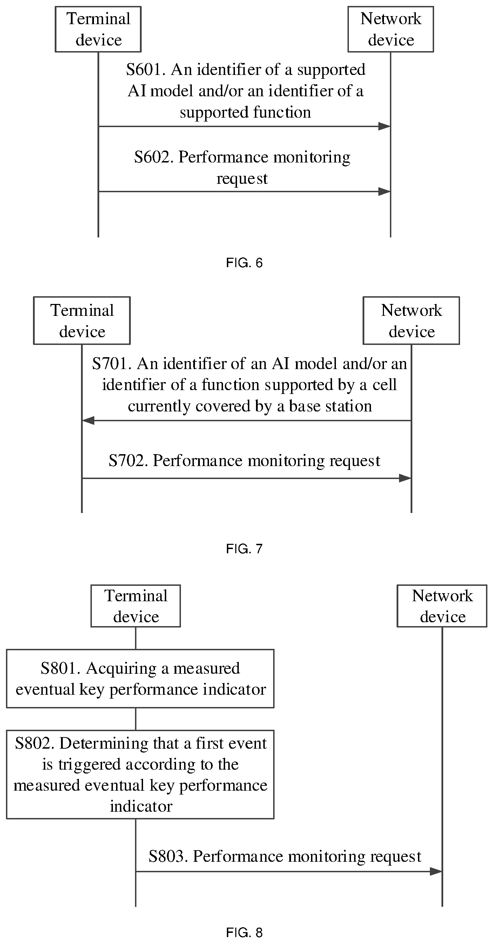

Based on the embodiment shown in FIG. 2, when an AI model is not activated, not selected, or not paired, the first event may include at least one of the following: transmitting an identifier of a supported AI model and/or an identifier of a supported function, or receiving an identifier of an AI model and/or an identifier of a function supported by a cell currently covered by a base station. Next, with reference to FIG. 6 and FIG. 7, a process of triggering a first event in this scenario will be described.

FIG. 6 is a schematic diagram of a method for triggering a first event provided by an embodiment of the present disclosure. In the embodiment shown in FIG. 6, the first event is that a terminal device transmits an identifier of a supported AI model and/or an identifier of a supported function. Referring to FIG. 6, the method flow includes the following.

S601, a terminal device transmits an identifier of an AI model supported by the terminal device and/or an identifier of a function supported by the terminal device to a network device.

When an AI model is not activated, not selected, or not paired, an AI model or a function in a current scenario has not yet been initiated, and therefore, the terminal device can transmit a performance monitoring request for an AI model when initiating AI model activation, initiating AI model selection, or initiating AI model pairing.

The first event may be an event of transmitting an identifier of a supported AI model and/or an identifier of a supported function. For example, the terminal device may transmit an identifier of an AI model (may also be an identifier of a function) currently supported by the terminal device to the network device, and the network device can determine an activated AI model according to the identifier of the AI model. For example, the identifier of the AI model supported by the terminal device transmitted by the terminal to the network device includes: an identifier of AI model 1, an identifier of AI model 2, and an identifier of AI model 3. If the network device supports the AI model 1 and the AI model 2, the network device can activate the AI model 1 and the AI model 2.

It should be noted that when the terminal device accesses a new network, the terminal device can transmit the identifier of the supported AI model and/or the identifier of the supported function to the network device, and the terminal device can also transmit the identifier of the supported AI model and/or the identifier of the supported function to the network device in any feasible scenario, which is not limited in the embodiments of the present disclosure.

S602, the terminal device transmits a performance monitoring request to the network device.

When the terminal device transmits the identifier of the supported AI model and/or the identifier of the supported function to the network device, the terminal device can determine that a trigger event has occurred, and the terminal device can transmit the performance monitoring request for the AI model to the network device. For example, the terminal device transmits the identifier of the supported AI model to the network device, the network device can transmit an identifier of an activated AI model to AI model(s), and the terminal device can transmit the performance monitoring request to the network device, where the monitoring request may include the identifier of the activated AI model. In this way, when the AI model is activated, the terminal device can initiate performance monitoring of that AI model, thereby improving communication stability.

In some embodiments, the performance monitoring request may include a start time of performance monitoring and/or an end time of performance monitoring. For example, when an AI model is not activated, not selected, or not paired, an AI model and/or a function has not yet been initiated, and after the network device activates, selects, or pairs an AI model, the terminal device can instruct the network model to execute the performance monitoring process of the AI model after a time period from the AI model is activated, selected, or paired, which can improve the accuracy of the performance monitoring of the AI model.

It should be noted that in this scenario, the performance monitoring request may also carry target information, which is not limited in the embodiments of the present disclosure.

The present disclosure provides a method for triggering a first event, including: transmitting an identifier of an AI model supported by a terminal device and/or an identifier of a function supported by a terminal device to a network device, and transmitting a model monitoring request to the network device. In this way, when the terminal device accesses a new network, the terminal device can timely transmit the supported AI model and/or function to the network device, thereby activating, selecting, or pairing the AI model and/or function commonly supported by the terminal device and the network device. Furthermore, when the AI model is activated, selected, or paired, the terminal device can initiate performance monitoring of the AI model, thereby improving communication stability.

FIG. 7 is a schematic diagram of another method for triggering a first event provided by an embodiment of the present disclosure. In the embodiment shown in FIG. 7, the first event is that a terminal device receives an identifier of an AI model and/or an identifier of a function supported by a cell currently covered by a base station. Referring to FIG. 7, the method flow includes the following.

S701, a terminal device receives an identifier of an AI model and/or an identifier of a function supported by a cell currently covered by a base station.

Here, the terminal device may receive the identifier of the AI model and/or the identifier of the function supported by the cell covered by the base station where the terminal device is currently located. For example, when the terminal device performs a cell handover, the AI model has not yet been activated, selected, or paired, and therefore, the terminal device can determine an AI model or a function to be activated, selected, or paired, and initiate performance monitoring of the AI model. For example, a network device may transmit an identifier of an AI model (which may also be an identifier of a function) supported by a cell to the terminal device, and the terminal device can determine an AI model to be activated, selected, or paired based on the identifier of the AI model supported by the cell and an identifier of an AI model supported by the terminal device.

For example, the identifier of the AI model supported by the cell transmitted by the network device to the terminal device includes: an identifier of AI model 1, an identifier of AI model 2, and an identifier of AI model 3. If the terminal device supports the AI model 1 and the AI model 2, the terminal device can request to activate the AI model 1 and the AI model 2.

It should be noted that when the terminal device is located in a new cell or performs cell handover, the terminal device may receive the identifier of the AI model and/or the identifier of the function supported by the cell transmitted by the network device, and the terminal device may also receive the identifier of the AI model and/or the identifier of the function supported by the cell transmitted by the network device in any feasible scenario, which is not limited in the embodiments of the present disclosure.

S702, the terminal device transmits a performance monitoring request to the network device.

When the terminal device receives the identifier of the AI model and/or the identifier of the function supported by the cell currently covered by the base station transmitted by the network device, the terminal device can determine that a trigger event has occurred, and the terminal device can transmit the performance monitoring request for the AI model to the network device. For example, when the terminal device receives the identifier of the AI model supported by the cell transmitted by the network device, the terminal device can determine an activated AI model, and transmit an identifier of the activated AI model to the network device. Furthermore, the terminal device can transmit the performance monitoring request for the AI model to the network device. In this way, when the AI model is activated, the terminal device can initiate performance monitoring of the AI model, thereby improving communication stability.

In some embodiments, the performance monitoring request may include the identifier of the AI model, the identifier of the function, a start time of performance monitoring, an end time of performance monitoring, and target information, which is not limited in the embodiments of the present disclosure.

The present disclosure provides a method for triggering a first event, where a terminal device receives an identifier of an AI model and/or an identifier of a function supported by a cell currently covered by a base station, and the terminal device transmits a performance monitoring request to a network device. In this way, when the terminal device switches cells, the terminal device can timely activate the AI model or function commonly supported by the terminal device and the network device, and when the AI model or the function is activated, the terminal device can initiate performance monitoring, thereby improving communication stability.

Based on any of the above embodiments, when the AI model is activated, selected, or paired, the terminal device can determine the first event based on at least one piece of information, where the at least one piece of information may include a measured eventual key performance indicator, statistical information and/or distribution information of information related to measured CSI, statistical information and/or distribution information of information related to CSI inferred by the AI model, a generalization indicator of the AI model, update information and/or transfer information of the AI model. When the terminal device determines that the first event is triggered, the terminal device can transmit the performance monitoring request for the AI model to the network device.

Next, with reference to FIG. 8 to FIG. 12, a process of the terminal device transmitting the performance monitoring request in this scenario will be described. It should be noted that a threshold, a duration, and a target value in the embodiments of the present disclosure are obtained based on a protocol pre-definition and/or a network side configuration and/or a combination of a protocol pre-definition and a network side configuration.

FIG. 8 is a schematic diagram of a method for transmitting a performance monitoring request provided by an embodiment of the present disclosure. Referring to FIG. 8, in the embodiment shown in FIG. 8, the first event is an event determined based on the measured eventual key performance indicator. The method flow includes the following.

S801, acquiring a measured eventual key performance indicator.

Here, the measured eventual key performance indicator may be an eventual KPI measured by a terminal device. For example, the eventual KPI measured by the terminal device may include parameters such as user throughput, block error rate and the like, which is not limited in the embodiments of the present disclosure.

It should be noted that the terminal device can measure the eventual KPI according to any feasible implementation, which is not limited in the embodiments of the present disclosure.

S802, determining that a first event is triggered according to the measured eventual key performance indicator.

Here, if the first event is an event determined based on the measured eventual key performance indicator, the first event includes at least one of the following:
a first parameter in the eventual key performance indicator being less than a threshold corresponding to the first parameter;
a second parameter in the eventual key performance indicator being greater than a threshold corresponding to the second parameter;
a number of times a first parameter in the eventual key performance indicator is less than a threshold corresponding to the first parameter within a first duration being greater than a first threshold;
a number of times a second parameter in the eventual key performance indicator is greater than a threshold corresponding to the second parameter within a first duration being greater than a first threshold; or
a deviation between a parameter in the eventual key performance indicator and a first target value being greater than a second threshold.

Among them, the first parameter may be positively correlated with the performance of the AI model. For example, the larger the first parameter in the eventual KPI, the higher the performance of the AI model, and the smaller the first parameter in the eventual KPI, the lower the performance of the AI model. For example, the first parameter may be user throughput. If the user throughput is large, it indicates that the communication quality is good, and thus it indicates that the performance of the AI model is high. If the user throughput is small, it indicates that the communication quality is poor, and thus it indicates that the performance of the AI model is low.

The second parameter is negatively correlated with the performance of the AI model. For example, the larger the second parameter in the eventual KPI, the lower the performance of the AI model, and the smaller the second parameter in the eventual KPI, the higher the performance of the AI model. For example, the second parameter may be a block error rate. If the block error rate is large, it indicates that the communication quality is poor, and thus it indicates that the performance of the AI model is low. If the block error rate is small, it indicates that the communication quality is good, and thus it indicates that the performance of the AI model is high.

The first target value is a target value corresponding to the parameter in the eventual key performance indicator. For example, if the parameter in the eventual KPI is throughput, the first target value may be a target value corresponding to throughput. If the parameter in the eventual KPI is a block error rate, the first target value may be a target value corresponding to the block error rate.

It should be noted that the first threshold, the second threshold, the first duration, the first target value, the threshold corresponding to the first parameter, and the threshold corresponding to the second parameter may be predefined by a protocol and/or configured by the network device and/or obtained by a combination of a protocol pre-definition and a network side configuration, or may be determined based on any other feasible implementation, which is not limited in the embodiments of the present disclosure.

In some embodiments, if the first parameter in the eventual key performance indicator is less than the threshold corresponding to the first parameter, the terminal device may determine that the first event is triggered. For example, the first parameter may be throughput, and the threshold corresponding to the throughput may be a preset throughput. If throughput measured by the terminal device is less than the preset throughput, it indicates that current communication quality is poor, and the terminal device triggers the first event, and thereby can transmit a performance monitoring request for the AI model to the network device.

In some embodiments, if the second parameter in the eventual key performance indicator is greater than the threshold corresponding to the second parameter, the terminal device may determine that the first event is triggered. For example, the second parameter may be a block error rate, and the threshold corresponding to the block error rate may be a preset block error rate. If a block error rate measured by the terminal device is greater than the preset block error rate, it indicates that the current communication quality is poor, and the terminal device triggers the first event, and thereby can transmit the performance monitoring request for the AI model to the network device.

In some embodiments, if the number of times the first parameter in the eventual key performance indicator is less than the threshold corresponding to the first parameter within the first duration is greater than the first threshold, the terminal device may determine that the first event is triggered. For example, the first parameter may be throughput, the threshold corresponding to the throughput may be threshold 1, and the first threshold may be threshold 2. Within the first duration, if the number of times the throughput measured by the terminal device (the terminal device can measure the throughput based on a preset sampling frequency) is less than threshold 1 is 10, and 10 is greater than threshold 2, the terminal device can determine that the current communication quality is poor, and the terminal device triggers the first event, and thereby can transmit the performance monitoring request for the AI model to the network device. For example, the first duration is 10 seconds, a threshold corresponding to the throughput is a preset throughput, and the first threshold is 3 times. If the number of times throughput measured by the terminal device within 10 seconds is less than the preset throughput is 10, the terminal device can determine that the first event is triggered, and transmit the performance monitoring request for the AI model to the network device.

In some embodiments, if the number of times the second parameter in the final KPI is greater than the threshold corresponding to the second parameter within the first duration is greater than the first threshold, the terminal device may determine that the first event is triggered. For example, the second parameter may be a block error rate, the threshold corresponding to the block error rate may be threshold 1, and the second threshold may be threshold 2. Within the first duration, if the number of times the block error rate measured by the terminal device is less than threshold 1 is 10, and 10 is greater than threshold 2, the terminal device can determine that the current communication quality is poor, and the terminal device triggers the first event, and thereby can transmit the performance monitoring request for the AI model to the network device. For example, the first duration is 10 seconds, the threshold corresponding to the block error rate is a preset block error rate, and the first threshold is 3 times. If the number of times the block error rate measured by the terminal device within 10 seconds is less than the preset block error rate is 4, the terminal device can determine that the first event is triggered, and transmit the performance monitoring request for the AI model to the network device.

In some embodiments, if the deviation between the parameter in the eventual key performance indicator and the first target value is greater than the second threshold, the terminal device may determine that the first event is triggered. For example, the parameter in the eventual key performance indicator may include the first parameter and the second parameter, where each parameter has a corresponding first target value. If the deviation between the parameter in the eventual key performance indicator and the first target value corresponding to the parameter is greater than the second threshold, it indicates that the current communication quality is poor, and the terminal device can transmit the performance monitoring request for the AI model to the network device. For example, the parameter in the eventual key performance indicator is throughput, the first target value corresponding to throughput is a preset throughput, and if a difference between the throughput measured by the terminal device and the preset throughput is greater than the second threshold, the terminal device can determine that the first event is triggered, and transmit the performance monitoring request to the network device.

S803, transmitting a performance monitoring request to a network device.

When the terminal device determines that the first event is currently triggered according to the eventual key performance indicator, the terminal device can transmit the monitoring request for the AI model to the network device.

The present disclosure provides a method for transmitting a monitoring request. A terminal device can acquire measured eventual key performance indicator, determine that the terminal device triggers the first event according to according to the measured eventual key performance indicator, and transmit the monitoring request to the network device. In this way, the terminal device can determine the communication quality according to the eventual key performance indicator, and determine whether to initiate monitoring of the AI model based on the communication quality. Thus, when a sudden event such as communication quality degradation occurs, the terminal device can timely perform performance monitoring on the AI model, improving the accuracy of AI model performance monitoring, and thereby improving communication stability.

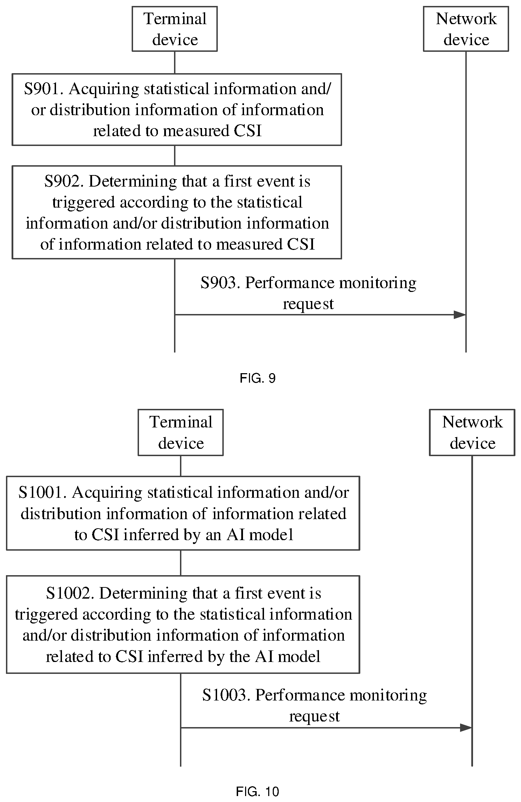

FIG. 9 is a schematic diagram of another method for transmitting a performance monitoring request provided by an embodiment of the present disclosure. Referring to FIG. 9, in the embodiment shown in FIG. 9, the first event is an event determined based on statistical information and/or distribution information of information related to measured CSI. The method flow includes the following.

S901, acquiring statistical information and/or distribution information of information related to measured CSI.

The statistical information and/or distribution information of information related to measured CSI may include information such as average delay and delay spread corresponding to information related to CSI measured by the terminal device. For example, the information related to CSI may be CSI information, and statistical information and/or distribution information corresponding to the CSI information measured by the terminal device may include information such as average delay, delay spread, Doppler shift, Doppler spread, LOS distribution, NLOS distribution, channel covariance matrix, and KL (Kullback-Leibler) divergence associated with the CSI information.

It should be noted that the terminal device can acquire the statistical information and/or distribution information of information related to measured CSI according to any feasible implementation, which is not limited in the embodiments of the present disclosure.

S902, determining that a first event is triggered according to the statistical information and/or distribution information of information related to measured CSI.

Here, if the first event is an event determined based on the statistical information and/or distribution information of information related to measured CSI, the first event includes at least one of the following:
a third parameter in the statistical information and/or distribution information of information related to measured CSI being greater than a threshold corresponding to the third parameter;
a fourth parameter in the statistical information and/or distribution information of information related to measured CSI being less than a threshold corresponding to the fourth parameter;
a number of times a third parameter in the statistical information and/or distribution information of information related to measured CSI is greater than a threshold corresponding to the third parameter within a second duration being greater than a third threshold;
a number of times a fourth parameter in the statistical information and/or distribution information of information related to measured CSI is greater than a threshold corresponding to the fourth parameter within a second duration being greater than a third threshold; or
a deviation between a parameter in the statistical information and/or distribution information of information related to measured CSI and a second target value being greater than a fourth threshold.

Among them, the third parameter may be negatively correlated with the performance of the AI model. For example, the larger the third parameter in the statistical information and distribution information, the lower the performance of the AI model, and the smaller the third parameter in the statistical information and distribution information, the higher the performance of the AI model. For example, the third parameter may be average delay. If the average delay is large, it indicates that the communication quality is poor, and thus it indicates that the performance of the AI model is low. If the average delay is small, it indicates that the communication quality is good, and thus it indicates that the performance of the AI model is high.

The fourth parameter may be positively correlated with the performance of the AI model. For example, the larger the fourth parameter in the statistical information and distribution information, the higher the performance of the AI model, and the smaller the fourth parameter in the statistical information and distribution information, the lower the performance of the AI model. The fourth parameter may be any parameter in the statistical information and distribution information that is positively correlated with the performance of the AI model, which is not limited in the embodiments of the present disclosure.

The second target value is a target value corresponding to the parameter in the statistical information and/or distribution information of information related to measured CSI. For example, if the parameter in the statistical information and distribution information is average delay, the second target value may be a target value corresponding to the average delay. If the parameter in the statistical information and distribution information is delay spread, the second target value may be a target value corresponding to the delay spread.

It should be noted that the third threshold, the fourth threshold, the second duration, the second target value, the threshold corresponding to the third parameter, and the threshold corresponding to the fourth parameter may be predefined by a protocol and/or configured by the network device, or may be determined based on any other feasible implementation, which is not limited in the embodiments of the present disclosure.

In some embodiments, if the third parameter in the statistical information and/or distribution information of information related to measured CSI is greater than the threshold corresponding to the third parameter, the terminal device may determine that the first event is triggered. For example, the third parameter may be average delay, and a threshold corresponding to the average delay may be a preset delay. If average delay calculated by the terminal device is greater than the preset delay, it indicates that the current communication quality is poor, and the terminal device triggers the first event, and thereby can transmit the performance monitoring request for the AI model to the network device.

In some embodiments, if the fourth parameter in the statistical information and/or distribution information of information related to measured CSI is less than the threshold corresponding to the fourth parameter, the terminal device may determine that the first event is triggered. For example, if the fourth parameter calculated by the terminal device is less than the threshold corresponding to the fourth parameter, it indicates that the current communication quality is poor, and the terminal device triggers the first event, and thereby can transmit the performance monitoring request for the AI model to the network device.

In some embodiments, if the number of times the third parameter in the statistical information and/or distribution information of information related to measured CSI is greater than the threshold corresponding to the third parameter within the second duration is greater than the third threshold, the terminal device may determine that the first event is triggered. For example, the third parameter may be average delay, a threshold corresponding to the average delay may be threshold 1, and the third threshold may be threshold 2. Within the second duration, if the number of times average delay calculated by the terminal device is greater than threshold 1 is 10, and 10 is greater than threshold 2, the terminal device can determine that the current communication quality is poor, and the terminal device triggers the first event, and thereby can transmit the performance monitoring request for the AI model to the network device. For example, the second duration is 10 seconds, a threshold corresponding to the average delay is a preset delay, and the third threshold is 3 times. If the number of times average delay calculated by the terminal device within 10 seconds is greater than the preset delay is 4, the terminal device can determine that the first event is triggered, and transmit the performance monitoring request for the AI model to the network device.

In some embodiments, if the number of times the fourth parameter in the statistical information and/or distribution information of information related to measured CSI is less than the threshold corresponding to the fourth parameter within the second duration is greater than the third threshold, the terminal device may determine that the first event is triggered. For example, the threshold corresponding to the fourth parameter may be threshold 1, and the third threshold may be threshold 2. Within the second duration, if the number of times the fourth parameter calculated by the terminal device is less than threshold 1 is 4, and 4 is greater than threshold 2, the terminal device can determine that the current communication quality is poor, and the terminal device triggers the first event, and thereby can transmit the performance monitoring request for the AI model to the network device. For example, the second duration is 10 seconds, the threshold corresponding to the fourth parameter is a preset threshold, and the third threshold is 3 times. If the number of times the fourth parameter corresponding to the statistical information and/or distribution information of information related to measured CSI within 10 seconds is less than the preset threshold is 4, the terminal device can determine that the first event is triggered, and transmit the performance monitoring request for the AI model to the network device.

In some embodiments, if the deviation between the parameter in the statistical information and/or distribution information of information related to measured CSI and the second target value is greater than the fourth threshold, the terminal device may determine that the first event is triggered. For example, a parameter in the statistical information and/or distribution information of information related to measured CSI may include the third parameter and the fourth parameter, where each parameter has a corresponding second target value. If the deviation between the parameter in the statistical information and/or distribution information of information related to measured CSI and the second target value corresponding to the parameter is greater than the fourth threshold, it indicates that the current communication quality is poor, and the terminal device can transmit the performance monitoring request for the AI model to the network device. For example, the parameter in the statistical information and/or distribution information of information related to measured CSI is average delay, a second target value corresponding to the average delay is a preset delay, and if a difference between the average delay calculated by the terminal device and the preset delay is greater than the fourth threshold, the terminal device can determine that the first event is triggered, and transmit the performance monitoring request to the network device.

S903, transmitting a performance monitoring request to a network device.

When the terminal device determines that the first event is currently triggered according to the statistical information and/or distribution information of information related to measured CSI, the terminal device can transmit the performance monitoring request for the AI model to the network device.

The present disclosure provides a method for transmitting a performance monitoring request, including: acquiring statistical information and/or distribution information of information related to measured CSI, determining that the terminal device triggers the first event according to the statistical information and/or distribution information of information related to measured CSI, and transmitting the performance monitoring request to the network device. In this way, the terminal device can determine the communication quality according to the statistical information and/or distribution information of information related to measured CSI, and determine whether to initiate performance monitoring of the AI model based on the communication quality. Thus, when a sudden event such as communication quality degradation occurs, the terminal device can timely perform performance monitoring on the AI model, improving the accuracy of AI model performance monitoring, and thereby improving communication stability.

FIG. 10 is a schematic diagram of another method for transmitting a performance monitoring request provided by an embodiment of the present disclosure. Referring to FIG. 10, in the embodiment shown in FIG. 10, the first event is an event determined based on statistical information and/or distribution information of information related to CSI inferred by an AI model. The method flow includes the following.

S1001, acquiring statistical information and/or distribution information of information related to CSI inferred by an AI model.

The statistical information and/or distribution information of information related to CSI inferred by the AI model may include information such as average delay and delay spread corresponding to information related to CSI inferred by the AI model, etc. For example, the information related to CSI may be beam information, etc., and statistical information and/or distribution information corresponding to the beam information inferred by the AI model may include information such as average delay, delay spread, Doppler shift, Doppler spread, LOS distribution, NLOS distribution, channel covariance matrix, and KL (Kullback-Leibler) divergence associated with the beam information.

It should be noted that the terminal device can acquire the statistical information and/or distribution information of information related to CSI inferred by the AI model according to any feasible implementation, which is not limited in the embodiments of the present disclosure.

S1002, determining that a first event is triggered according to the statistical information and/or distribution information of information related to CSI inferred by the AI model.

Here, if the first event is an event determined based on the statistical information and/or distribution information of information related to CSI inferred by the AI model, the first event includes at least one of the following:
a fifth parameter in the statistical information and/or distribution information of information related to inferred CSI being greater than a threshold corresponding to the fifth parameter;
a sixth parameter in the statistical information and/or distribution information of information related to inferred CSI being less than a threshold corresponding to the sixth parameter;
a number of times a fifth parameter in the statistical information and/or distribution information of information related to inferred CSI is greater than a threshold corresponding to the fifth parameter within a third duration being greater than a fifth threshold;
a number of times a sixth parameter in the statistical information and/or distribution information of information related to inferred CSI is greater than a threshold corresponding to the sixth parameter within a third duration being greater than a fifth threshold; or
a deviation between a parameter in the statistical information and/or distribution information of information related to inferred CSI and a third target value being greater than a sixth threshold.

Among them, the fifth parameter may be negatively correlated with the performance of the AI model. For example, the larger the fifth parameter in the statistical information and distribution information, the lower the performance of the AI model, and the smaller the fifth parameter in the statistical information and distribution information, the higher the performance of the AI model. For example, the fifth parameter may be average delay. If the average delay is large, it indicates that the communication quality is poor, and thus it indicates that the performance of the AI model is low. If the average delay is small, it indicates that the communication quality is good, and thus it indicates that the performance of the AI model is high.

The sixth parameter may be positively correlated with the performance of the AI model. For example, the larger the sixth parameter in the statistical information and distribution information, the higher the performance of the AI model, and the smaller the sixth parameter in the statistical information and distribution information, the lower the performance of the AI model. The sixth parameter may be any parameter in the statistical information and distribution information that is positively correlated with the performance of the AI model, which is not limited in the embodiments of the present disclosure.

The third target value is a target value corresponding to the parameter in the statistical information and/or distribution information of information related to inferred CSI. For example, if the parameter in the statistical information and distribution information is average delay, the third target value may be a target value corresponding to the average delay. If the parameter in the statistical information and distribution information is delay spread, the third target value may be a target value corresponding to the delay spread.

It should be noted that the fifth threshold, the sixth threshold, the third duration, the third target value, the threshold corresponding to the fifth parameter, and the threshold corresponding to the sixth parameter may be predefined by a protocol and/or configured by the network device, or may be determined based on any other feasible implementation, which is not limited in the embodiments of the present disclosure.

In some embodiments, if the fifth parameter in the statistical information and/or distribution information of information related to inferred CSI is greater than the threshold corresponding to the fifth parameter, the terminal device may determine that the first event is triggered. For example, the fifth parameter may be average delay, and a threshold corresponding to the average delay may be a preset delay. If average delay calculated by the terminal device is greater than the preset delay, it indicates that the current communication quality is poor, and the terminal device triggers the first event, and thereby can transmit the performance monitoring request for the AI model to the network device.

In some embodiments, if the sixth parameter in the statistical information and/or distribution information of information related to inferred CSI is less than the threshold corresponding to the sixth parameter, the terminal device may determine that the first event is triggered. For example, if the sixth parameter calculated by the terminal device is less than the threshold corresponding to the sixth parameter, it indicates that the current communication quality is poor, and the terminal device triggers the first event, and thereby can transmit the performance monitoring request for the AI model to the network device.

In some embodiments, if the number of times the fifth parameter in the statistical information and/or distribution information of information related to inferred CSI is greater than the threshold corresponding to the fifth parameter within the third duration is greater than the fifth threshold, the terminal device may determine that the first event is triggered. For example, the fifth parameter may be average delay, a threshold corresponding to the average delay may be threshold 1, and the fifth threshold may be threshold 2. Within the second duration, if the number of times average delay calculated by the terminal device is greater than threshold 1 is 4, and 4 is greater than threshold 2, the terminal device can determine that the current communication quality is poor, and the terminal device triggers the first event, and thereby can transmit the performance monitoring request for the AI model to the network device. For example, the third duration is 10 seconds, a threshold corresponding to the average delay is a preset delay, and the fifth threshold is 3 times. If the number of times average delay calculated by the terminal device within 10 seconds is greater than the preset delay is 4, the terminal device can determine that the first event is triggered, and transmit the performance monitoring request for the AI model to the network device.

In some embodiments, if the number of times the sixth parameter in the statistical information and/or distribution information of information related to inferred CSI is less than the threshold corresponding to the sixth parameter within the third duration is greater than the fifth threshold, the terminal device may determine that the first event is triggered. For example, the threshold corresponding to the sixth parameter may be threshold 1, and the fifth threshold may be threshold 2. Within the second duration, if the number of times sixth parameter calculated by the terminal device is less than threshold 1 is 4, and 4 is greater than threshold 2, the terminal device can determine that the current communication quality is poor, and the terminal device triggers the first event, and thereby can transmit the performance monitoring request for the AI model to the network device. For example, the third duration is 10 seconds, the threshold corresponding to the sixth parameter is a preset threshold, and the fifth threshold is 3 times. If the number of times the sixth parameter calculated by the terminal device within 10 seconds is less than the preset threshold is 4, the terminal device can determine that the first event is triggered, and transmit the performance monitoring request for the AI model to the network device.

In some embodiments, if the deviation between the parameter in the statistical information and/or distribution information of information related to inferred CSI and the third target value is greater than the sixth threshold, the terminal device may determine that the first event is triggered. For example, a parameter in the statistical information and/or distribution information of information related to inferred CSI may include the fifth parameter and the sixth parameter, where each parameter has a corresponding third target value. If the deviation between the parameter in the statistical information and/or distribution information of information related to inferred CSI and the third target value corresponding to the parameter is greater than the sixth threshold, it indicates that the current communication quality is poor, and the terminal device can transmit the performance monitoring request for the AI model to the network device. For example, the parameter in the statistical information of information related to inferred CSI is average delay, a third target value corresponding to the average delay is a preset delay, and if a difference between the average delay calculated by the terminal device and the preset delay is greater than the sixth threshold, the terminal device can determine that the first event is triggered, and transmit the performance monitoring request to the network device.

S1003, transmitting a performance monitoring request to a network device.

When the terminal device determines that the first event is currently triggered according to the statistical information and/or distribution information of information related to inferred CSI, the terminal device can transmit the performance monitoring request for the AI model to the network device.

The present disclosure provides a method for transmitting a performance monitoring request, including: acquiring statistical information and/or distribution information of information related to inferred CSI, determining that the terminal device triggers the first event according to the statistical information and/or distribution information of information related to inferred CSI, and transmitting the performance monitoring request to the network device. In this way, the terminal device can determine the communication quality according to the statistical information and/or distribution information of information related to inferred CSI, and determine whether to initiate performance monitoring of the AI model based on the communication quality. Thus, when a sudden event such as communication quality degradation occurs, the terminal device can timely perform performance monitoring on the AI model, improving the accuracy of AI model performance monitoring, and thereby improving communication stability.

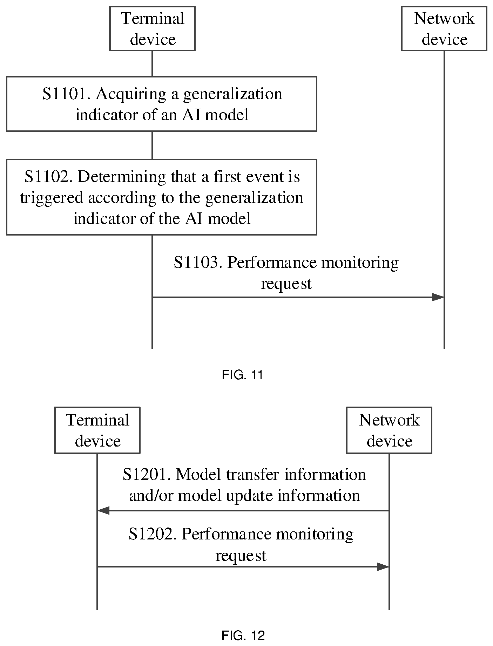

FIG. 11 is a schematic diagram of another method for transmitting a performance monitoring request provided by an embodiment of the present disclosure. Referring to FIG. 11, in the embodiment shown in FIG. 11, the first event is an event determined based on a generalization indicator of the AI model. The method flow includes the following.

S1101, acquiring a generalization indicator of an AI model.

Here, the generalization indicator of the AI model can indicate performance of the AI model. For example, the generalization indicator of the AI model may include environment, scenario, speed, location, and physical layer carrier resource configuration of the terminal device (the AI model is deployed at the terminal device).

It should be noted that the terminal device can acquire the generalization indicator of the AI model according to any feasible implementation, which is not limited in the embodiments of the present disclosure.

S1102, determining that a first event is triggered according to the generalization indicator of the AI model.

Here, if the first event is an event determined based on the generalization indicator of the AI model, the first event includes at least one of the following:
a duration in which a parameter in a performance indicator of a received reference signal is less than a seventh threshold being greater than an eighth threshold;
a number of times a parameter in a performance indicator of a received reference signal is less than a seventh threshold within a fourth duration being greater than a ninth threshold;
quasi-co-location information of a received reference signal changing;
a dataset label of information related to measured CSI changing;
a duration in which a parameter in measured speed information is greater than a tenth threshold being greater than an eleventh threshold;
a number of times a parameter in measured speed information is greater than a tenth threshold within a fifth duration being greater than a twelfth threshold; or
a distance difference between two positions measured at an interval of a sixth duration being greater than a thirteenth threshold.

Among them, the reference signal may be a signal of information related to CSI processed by the AI model. For example, if the AI model is a model for processing CSI, the reference signal may be a reference signal related to CSI. If the AI model is a model for processing a beam, the reference signal may be a reference signal related to a beam. If the AI model is a model for processing positioning, the reference signal may be a reference signal related to positioning.

The performance indicator of the reference signal may include SINR, L1 (L1-level filtered)-RSRP, L1-RSRQ, and L3 (L3-level filtered)-RSRP. The performance indicator of the reference signal may also include any other indicator, which is not limited in the embodiments of the present disclosure. For example, the terminal device can receive a reference signal transmitted by the network device.

The quasi-co-location (Quasi Co Location, QCL) information may include a QCL source and a QCL type.

It should be noted that the fourth duration, the fifth duration, the sixth duration, the seventh threshold, the eighth threshold, the ninth threshold, the tenth threshold, the eleventh threshold, the twelfth threshold, and the thirteenth threshold may be predefined by a protocol and/or configured by the network device, or may be determined based on any other feasible implementation, which is not limited in the embodiments of the present disclosure.

In some embodiments, if the duration in which the parameter in the performance indicator of the reference signal received by the terminal device is less than the seventh threshold is greater than the eighth threshold, the terminal device may determine that the first event is triggered. For example, the performance indicator of the reference signal may be SINR. If a duration in which the SINR is less than the seventh threshold is greater than the eighth threshold, it indicates that the current communication quality is poor, and the terminal device can determine that the first event is triggered, and transmit the performance monitoring request to the network device.

In some embodiments, if the number of times the parameter in the performance indicator of the reference signal received by the terminal device is less than the seventh threshold within the fourth duration is greater than the ninth threshold, the terminal device may determine that the first event is triggered. For example, the performance indicator of the reference signal may be SINR. If the number of times SINR determined by the terminal device within the fourth duration is less than the seventh threshold is greater than the ninth threshold, it indicates that the current communication quality is poor, and the terminal device can determine that the first event is triggered, and transmit the performance monitoring request to the network device. For example, the fourth duration is 10 seconds, the ninth threshold is 3 times, and if the number of times SINR determined by the terminal device within 10 seconds is less than the seventh threshold is 5, the terminal device can determine that the first event is triggered, and transmit the performance monitoring request to the network device.

In some embodiments, if the quasi-co-location information of the reference signal received by the terminal device changes, the terminal device may determine that the first event is triggered. For example, if a QCL source of the reference signal received by the terminal device changes, the terminal device can determine that the first event is triggered, and transmit the performance monitoring request to the network device. For example, if a QCL type of the reference signal received by the terminal device changes, the terminal device can determine that the first event is triggered, and transmit the performance monitoring request to the network device.

In some embodiments, if the dataset label of information related to CSI measured by the terminal device changes, the terminal device may determine that the first event is triggered. For example, the dataset label can indicate an environment and a scenario of the terminal device. For example, the terminal device can determine whether it is located indoors or outdoors according to the dataset label. For example, if the terminal device moves from indoors to outdoors, the dataset label changes, and the terminal device can determine that the first event is triggered, and transmit the performance monitoring request to the network device.

In some embodiments, if the duration in which the parameter in the speed information measured by the terminal device is greater than the tenth threshold is greater than the eleventh threshold, the terminal device may determine that the first event is triggered. For example, the parameter in the speed information may be an absolute value of a linear velocity. If a duration in which an absolute value of a linear velocity measured by the terminal device is greater than the tenth threshold is greater than the eleventh threshold, it indicates that the terminal device is moving rapidly, and the terminal device can determine that the first event is triggered, and transmit the performance monitoring request for the model to the network device. For example, the tenth threshold is 10 m/s, and the eleventh threshold is 60 seconds. If an absolute value of a linear velocity measured by the terminal device is 15 m/s within 100 seconds, the terminal device can determine that the first event is triggered, and transmit the performance monitoring request for the model to the network device.

In some embodiments, if the number of times the parameter in the speed information measured by the terminal device is greater than the tenth threshold within the fifth duration is greater than the twelfth threshold, the terminal device may determine that the first event is triggered. For example, the parameter in the speed information may be an absolute value of a linear velocity. Within the fifth duration, if the number of times an absolute value of a linear velocity measured by the terminal device (the terminal device can measure the linear velocity according to a sampling frequency) is greater than the tenth threshold is greater than the twelfth threshold, it indicates that the terminal device is moving rapidly, and the terminal device can determine that the first event is triggered, and transmit the performance monitoring request for the model to the network device. For example, the fifth duration is 10 seconds, the tenth threshold is 10 m/s, and the twelfth threshold is 5 times. Within 10 seconds, if the number of times an absolute value of a linear velocity measured by the terminal device is greater than 10 m/s is 10, the terminal device can determine that the first event is triggered, and transmit the performance monitoring request for the model to the network device.

In some embodiments, if the distance difference between two positions measured at the interval of the sixth duration by the terminal device is greater than the thirteenth threshold, the terminal device may determine that the first event is triggered. For example, the terminal device measures a position at time 1 to obtain position 1, and measures a position at time 2 to obtain position 2 (a duration between time 1 and time 2 is the sixth duration). If a distance difference between position 1 and position 2 is greater than the thirteenth threshold, the terminal device can determine that the first event is triggered, and transmit the performance monitoring request to the network device. For example, if the thirteenth threshold is 1000 meters and the sixth duration is 60 seconds, if the distance between two positions measured by the terminal device at an interval of 60 seconds is 2000 meters, the terminal device can determine that the first event is triggered, and transmit the performance monitoring request to the network device.

In some embodiments, if an operating center frequency, a subcarrier, and/or a bandwidth configuration of the terminal device changes, the terminal device may determine that the first event is triggered. For example, if the operating center frequency of the terminal device changes, the terminal device can determine that the first event is triggered. If the subcarrier of the terminal device changes, the terminal device can determine that the first event is triggered. If the bandwidth configuration of the terminal device changes, the terminal device can determine that the first event is triggered.

S1103, transmitting a performance monitoring request to a network device.

When the terminal device determines that the first event is currently triggered according to the generalization indicator of the AI model, the terminal device can transmit the performance monitoring request for the AI model to the network device.

The present disclosure provides a method for transmitting a performance monitoring request, including: acquiring a generalization indicator of an AI model, determining that the terminal device triggers the first event according to the generalization indicator of the AI model, and transmitting a performance monitoring request to a network device. In this way, the terminal device can determine that a network state of the terminal device has changed according to the generalization indicator of the AI model, and thereby can timely perform performance monitoring on the AI model, improving the accuracy of AI model performance monitoring, saving communication resources, and thereby improving communication stability.

FIG. 12 is a schematic diagram of another method for transmitting a performance monitoring request provided by an embodiment of the present disclosure. Referring to FIG. 12, in the embodiment shown in FIG. 12, the first event is an event determined based on update information and/or model transfer information of an AI model. The method flow includes the following.

S1201, receiving model transfer information and/or model update information transmitted by a network device.

Here, update information of the AI model can indicate an update of the AI model, and transfer information of the AI model can indicate a transfer of the AI model. For example, a terminal device may receive the update information and the transfer information of the AI model transmitted by the network device or a server, and the terminal device can perform life cycle management operations on the AI model based on the above information.

It should be noted that the terminal device can acquire the model transfer information or model update information of the AI model according to any feasible implementation, which is not limited in the embodiments of the present disclosure.

S1202, transmitting a performance monitoring request to the network device.

Here, if the first event is an event determined based on the update information and/or the model transfer information of the AI model, the first event includes at least one of the following:
receiving the model update information and/or the model transfer information transmitted by the network device; or
not receiving an indication related to performance monitoring within a seventh duration after receiving the model update information and/or the model transfer information transmitted by the network device.

It should be noted that the seventh duration may be predefined by a protocol and/or configured by the network device, or may be determined based on any other feasible implementation, which is not limited in the embodiments of the present disclosure.

It should be noted that the terminal device may also receive model update information and model transfer information transmitted by a server, which is not limited in the embodiments of the present disclosure.

In some embodiments, if the terminal device receives the model update information and/or the model transfer information transmitted by the network device, the terminal device may determine that the first event is triggered. For example, if the terminal device receives the model update information transmitted by the network device, it indicates that the terminal device can perform life cycle management operations on the AI model. Therefore, the terminal device can transmit the performance monitoring request for the AI model to the network device, thereby performing performance monitoring on an updated AI model. For example, if the terminal device receives the model transfer information transmitted by the network device, it indicates that the terminal device can perform life cycle management operations on the AI model. Therefore, the terminal device can transmit the performance monitoring request for the AI model to the network device, thereby monitoring the performance of the transferred AI model.

In some embodiments, if the terminal device does not receive the indication related to performance monitoring within the seventh duration after receiving the model update information and/or the model transfer information transmitted by the network device, the terminal device may determine that the first event is triggered. For example, after receiving the model update information and/or the model transfer information transmitted by the network device, the terminal device can performance monitoring on an updated AI model or a transferred AI model. If the terminal device does not receive the indication related to performance monitoring transmitted by the network device, the terminal device can determine that the first event is triggered, and transmit the performance monitoring request to the network device.

The present disclosure provides a method for transmitting a performance monitoring request, including: receiving model transfer information and/or model update information transmitted by a network device, and transmitting a performance monitoring request to the network device. In this way, after the AI model is updated or transferred, the terminal device can initiate performance monitoring of the AI model, thereby improving the accuracy of performance monitoring and improving communication quality.

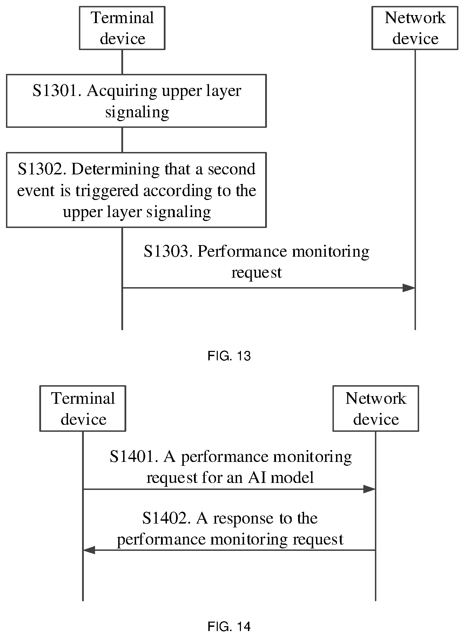

Based on any of the above embodiments, the trigger event includes a second event related to the performance of the terminal device, where the second event may be an event determined based on upper layer signaling of the terminal device. Next, with reference to FIG. 13, a process of the terminal device transmitting the performance monitoring request when the terminal device determines that the second event is triggered in this scenario will be described.

FIG. 13 is a schematic diagram of a method for transmitting a performance monitoring request provided by an embodiment of the present disclosure. Referring to FIG. 13, the method flow includes the following.

S1301, acquiring upper layer signaling.

Here, the upper layer signaling may include any information interacting with an upper protocol layer in a terminal device, which is not limited in the embodiments of the present disclosure. Furthermore, the terminal device can acquire the upper layer signaling according to any feasible implementation, which is not limited in the embodiments of the present disclosure.

S1302, determining that a second event is triggered according to the upper layer signaling.

Here, if the second event is an event determined based on the upper layer signaling, the second event includes at least one of the following:
a handover of a cell where the terminal device is located occurring;
a first monitoring quantity being greater than a fourteenth threshold;
a second monitoring quantity being less than a fifteenth threshold;
a first parameter of an eventual key performance indicator at a future time predicted based on an eventual key performance indicator at a current time being less than a threshold corresponding to the first parameter; or
a second parameter of an eventual key performance indicator at a future time predicted based on an eventual key performance indicator at a current time being greater than a threshold corresponding to the second parameter.

Among them, the first monitoring quantity is negatively correlated with the performance of the terminal device. For example, the first monitoring quantity may include power consumption and used memory of the terminal device, etc., which is not limited in the embodiments of the present disclosure.

The second monitoring quantity is positively correlated with the performance of the terminal device. For example, the second monitoring quantity may include remaining computing power and remaining memory of the terminal device, etc., which is not limited in the embodiments of the present disclosure.

It should be noted that the fourteenth threshold and the fifteenth threshold may be predefined by a protocol and/or configured by the network device, or may be determined based on any other feasible implementation, which is not limited in the embodiments of the present disclosure.

In some embodiments, if the cell where the terminal device is located performs the handover, the terminal device may determine that the second event is triggered. For example, when the cell where the terminal device is located performs a handover, the terminal device needs to determine a currently available AI model. Therefore, the terminal device can determine that the second event is triggered and transmit a monitoring request to the network device. For example, the terminal device transmitting the monitoring request to the network device can be triggered by a cell handover of the terminal device, and a cell handover measurement time of the terminal device and cell handover signaling can both trigger the terminal device to transmit a monitoring request for the AI model.

In some embodiments, if the first monitoring quantity is greater than the fourteenth threshold, the terminal device can determine that the second event is triggered. For example, the first monitored quantity may be power consumption of the terminal device. If the power consumption of the terminal device is greater than the fourteenth threshold, it indicates that the performance of the terminal device will affect communication quality, and the terminal device can determine that the second event is triggered, and transmit a monitoring request to a network device. For example, the first monitored quantity may be power consumption, and the fourteenth threshold is a preset power consumption. If current power consumption acquired by the terminal device is greater than the preset power consumption, it means that the terminal device is in poor performance, which will affect communication quality of the terminal device. Therefore, the terminal device can determine that the second event is triggered.

In some embodiments, if the second monitoring quantity is less than the fifteenth threshold, the terminal device may determine that the second event is triggered. For example, the second monitoring quantity may be remaining computing power of the terminal device. If the remaining computing power of the terminal device is less than the fourteenth threshold, it indicates that the performance of the terminal device will affect the communication quality, and the terminal device can determine that the second event is triggered, and transmit a monitoring request to a network device. For example, the second monitoring quantity may be remaining computing power, and the fifteenth threshold is a preset computing power. If current remaining computing power acquired by the terminal device is less than the preset computing power, it indicates that the current performance of the terminal device is poor, which will affect the communication quality of the terminal device. Therefore, the terminal device can determine that the second event is triggered.

In some embodiments, if the first parameter of the eventual key performance indicator at the future time predicted based on the eventual key performance indicator at the current time is less than the threshold corresponding to the first parameter, the terminal device may determine that the second event is triggered. For example, the first parameter may be throughput. If the throughput in the eventual key performance indicator at the future time predicted by the terminal device based on current throughput is less than a threshold corresponding to the throughput, the terminal device can determine that the second event is triggered.

In some embodiments, if the second parameter of the eventual key performance indicator at the future time predicted based on the eventual key performance indicator at the current time is greater than the threshold corresponding to the second parameter, the terminal device may determine that the second event is triggered. For example, the second parameter may be a block error rate. If the block error rate in the eventual key performance indicator at the future time predicted by the terminal device based on current throughput is greater than a threshold corresponding to the block error rate, the terminal device can determine that the second event is triggered.

S1303, transmitting a performance monitoring request to a network device.

When the terminal device determines that the second event is currently triggered according to the upper layer signaling, the terminal device can transmit the performance monitoring request for the AI model to the network device.

The present disclosure provides a method for transmitting a performance monitoring request, including: acquiring upper layer signaling, determining that the terminal device triggers the second event according to the upper layer signaling, and transmitting the performance monitoring request to the network device. In this way, the terminal device can determine the second event related to the performance of the terminal device according to the upper layer signaling. Since the second event can affect the communication of the terminal device, when the terminal device triggers the second event, the terminal device can timely transmit the performance monitoring request for the model to the network device, thereby improving the timeliness and accuracy of performance monitoring.

Based on any of the above embodiments, below, with reference to FIG. 14, a process of the network device transmitting the response to the performance monitoring request to the terminal device will be described.

FIG. 14 is a schematic diagram of a method for transmitting a response to a performance monitoring request to a terminal device provided by an embodiment of the present disclosure. Referring to FIG. 14, the method flow includes the following.

S1401, a network device receives a performance monitoring request for an AI model transmitted by a terminal device.

Here, the monitoring request may be determined by the terminal device based on a trigger event.

It should be noted that the trigger event and the information carried in the monitoring request can refer to the embodiments shown in FIG. 2 to FIG. 13, and will not be repeated here.

S1402, the network device transmits a response to the performance monitoring request to the terminal device.

Here, the network device transmitting the response to the performance monitoring request to the terminal device may be: determining, according to information carried in the performance monitoring request, whether performance monitoring is required for the AI model, to obtain a determination result, and transmitting the response to the performance monitoring request to the terminal device according to the determination result.

When receiving the performance monitoring request, the network device can determine whether to perform performance monitoring on the AI model according to target information in the performance monitoring request. For example, if the information carried in the performance monitoring request indicates that throughput is large, the network device may refuse to perform performance monitoring on the AI model. If the information carried in the monitoring request indicates that the throughput is small, the network device may agree to perform performance monitoring on the AI model.

In some embodiments, if the determination result is to agree to perform performance monitoring on the AI model, the response to the performance monitoring request transmitted by the network device to the terminal device may be an agreement. If the determination result is to refuse to perform performance monitoring on the AI model, the response to the performance monitoring request transmitted by the network device to the terminal device may be a refusal.

It should be noted that if the performance monitoring request does not include the target information, the network device may transmit a response to the performance monitoring request to the terminal device, where the response may be to agree to initiate performance monitoring or agree to activate performance monitoring.

The present disclosure provides a method for transmitting a response to a performance monitoring request to a terminal device. A network device receives a performance monitoring request for an AI model transmitted by the terminal device, determines whether performance monitoring needs to be performed on the AI model according to information carried in the performance monitoring request to obtain a determination result, and transmits a response to the performance monitoring request to the terminal device according to the determination result. In this way, the network device can accurately determine whether to initiate performance monitoring of the AI model according to the target information reported by the terminal device, thereby improving the accuracy of the performance monitoring of the AI model.

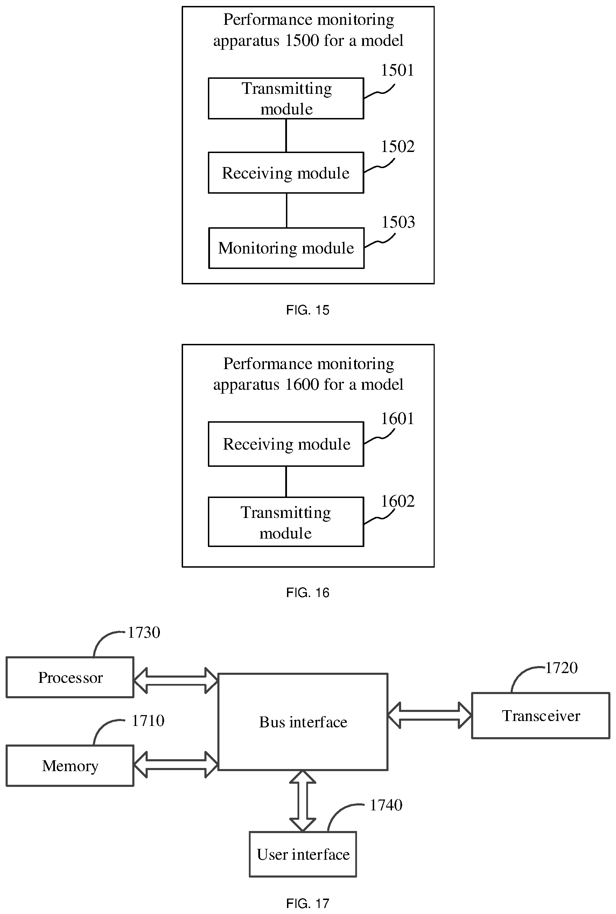

FIG. 15 is a structural schematic diagram of a performance monitoring apparatus provided by an embodiment of the present disclosure. Referring to FIG. 15, a performance monitoring apparatus 1500 includes a transmitting module 1501, a receiving module 1502, and a monitoring module 1503, where:
the transmitting module 1501 is configured to transmit a performance monitoring request for an AI model to a network device according to a trigger event;
the receiving module 1502 is configured to receive a response to the performance monitoring request from the network device;
the monitoring module 1503 is configured to perform performance monitoring on the AI model according to the response to the performance monitoring request.

In some embodiments, the performance monitoring request includes an identifier of the AI model and/or an identifier of a function.

In some embodiments, the performance monitoring request includes an identifier indicating an applicable model, an identifier indicating an applicable function, and an identifier indicating an applicable scenario corresponding to the performance monitoring request.

In some embodiments, the performance monitoring request includes a start time of performance monitoring and/or an end time of performance monitoring.

In some embodiments, the performance monitoring request includes target information, where the target information is related to a performance metric of the AI model and/or a metric value of the AI model.

In some embodiments, the target information includes at least one of the following:
an intermediate key performance indicator related to the AI model;
an eventual key performance indicator related to the AI model;
statistical information of information related to channel state information CSI;
distribution information of information related to CSI;
reference signal received power related to the AI model;
reference signal received quality related to the AI model;
a signal to interference plus noise ratio;
speed information; or
location information.

In some embodiments, the trigger event includes a first event related to the AI model and/or a function, and a second event related to performance of the terminal device.

In some embodiments, when the AI model is not activated, not selected, or not paired, the first event includes at least one of the following:
transmitting an identifier of a supported AI model and/or an identifier of a supported function; or
receiving an identifier of an AI model and/or an identifier of a function supported by a cell currently covered by a base station.

In some embodiments, when the AI model is activated, selected, or paired, the first event is an event determined based on at least one of the following:
a measured eventual key performance indicator;
statistical information and/or distribution information of information related to measured CSI;
statistical information and/or distribution information of information related to CSI inferred by the AI model;
a generalization indicator of the AI model; or
update information and/or transfer information of the AI model.

In some embodiments, the first event is an event determined based on the measured eventual key performance indicator, and the first event includes at least one of the following:
a first parameter in the eventual key performance indicator being less than a threshold corresponding to the first parameter, where the first parameter is positively correlated with performance of the AI model;
a second parameter in the eventual key performance indicator being greater than a threshold corresponding to the second parameter, where the second parameter is negatively correlated with performance of the AI model;
the number of times a first parameter in the eventual key performance indicator is less than a threshold corresponding to the first parameter within a first duration being greater than a first threshold;
the number of times a second parameter in the eventual key performance indicator is greater than a threshold corresponding to the second parameter within a first duration being greater than a first threshold; or
a deviation between a parameter in the eventual key performance indicator and a first target value being greater than a second threshold, where the first target value is a target value corresponding to the parameter in the eventual key performance indicator.

In some embodiments, the first event is an event determined based on the statistical information and/or distribution information of information related to measured CSI, and the first event includes at least one of the following:
a third parameter in the statistical information and/or distribution information of information related to measured CSI being greater than a threshold corresponding to the third parameter, where the third parameter is negatively correlated with performance of the AI model;
a fourth parameter in the statistical information and/or distribution information of information related to measured CSI being less than a threshold corresponding to the fourth parameter, where the fourth parameter is positively correlated with performance of the AI model;
the number of times a third parameter in the statistical information and/or distribution information of information related to measured CSI is greater than a threshold corresponding to the third parameter within a second duration being greater than a third threshold;
the number of times a fourth parameter in the statistical information and/or distribution information of information related to measured CSI is less than a threshold corresponding to the fourth parameter within a second duration being greater than a third threshold; or
a deviation between a parameter in the statistical information and/or distribution information of information related to measured CSI and a second target value being greater than a fourth threshold, where the second target value is a target value corresponding to the parameter in the statistical information and/or distribution information of information related to measured CSI.

In some embodiments, the first event is an event determined based on the statistical information and/or distribution information of information related to CSI inferred by the AI model, and the first event includes at least one of the following:
a fifth parameter in the statistical information and/or distribution information of information related to inferred CSI being greater than a threshold corresponding to the fifth parameter, where the fifth parameter is negatively correlated with performance of the AI model;
a sixth parameter in the statistical information and/or distribution information of information related to inferred CSI being less than a threshold corresponding to the sixth parameter, where the sixth parameter is positively correlated with performance of the AI model;
the number of times a fifth parameter in the statistical information and/or distribution information of information related to inferred CSI is greater than a threshold corresponding to the fifth parameter within a third duration being greater than a fifth threshold;
the number of times a sixth parameter in the statistical information and/or distribution information of information related to inferred CSI is less than a threshold corresponding to the sixth parameter within a third duration being greater than a fifth threshold; or
a deviation between a parameter in the statistical information and/or distribution information of information related to inferred CSI and a third target value being greater than a sixth threshold, where the third target value is a target value corresponding to the parameter in the statistical information and/or distribution information of information related to inferred CSI.

In some embodiments, the first event is an event determined based on the generalization indicator of the AI model, and the first event includes at least one of the following:
a duration in which a parameter in a performance indicator of a received reference signal is less than a seventh threshold being greater than an eighth threshold;
the number of times a parameter in a performance indicator of a received reference signal is less than a seventh threshold within a fourth duration being greater than a ninth threshold;
quasi-co-location information of a received reference signal changing;
a dataset label of information related to measured CSI changing;
a duration in which a parameter in measured speed information is greater than a tenth threshold being greater than an eleventh threshold;
the number of times a parameter in measured speed information is greater than a tenth threshold within a fifth duration being greater than a twelfth threshold;
a distance difference between two positions measured at an interval of a sixth duration being greater than a thirteenth threshold; or
an operating center frequency, a subcarrier, and/or a bandwidth configuration changing.

In some embodiments, the first event is an event determined based on update information and/or model transfer information of the AI model, and the first event includes at least one of the following:
receiving model update information and/or model transfer information transmitted by the network device; or
not receiving an indication related to performance monitoring within a seventh duration after receiving the model update information and/or the model transfer information transmitted by the network device.

In some embodiments, the second event is an event determined based on upper layer signaling, and the second event includes at least one of the following:
a handover of a cell where the terminal device is located occurring;
a first monitoring quantity being greater than a fourteenth threshold, where the first monitoring quantity is negatively correlated with the performance of the terminal device;
a second monitoring quantity being less than a fifteenth threshold, where the second monitoring quantity is positively correlated with the performance of the terminal device;
a first parameter of an eventual key performance indicator at a future time predicted based on an eventual key performance indicator at a current time being less than a threshold corresponding to the first parameter; or
a second parameter of an eventual key performance indicator at a future time predicted based on an eventual key performance indicator at a current time being greater than a threshold corresponding to the second parameter.

In some embodiments, the threshold, duration, and target value are obtained based on a protocol pre-definition and/or a network side configuration and/or a combination of a protocol pre-definition and a network side configuration.

In some embodiments, the information related to CSI includes CSI information, beam information, and positioning information.

In some embodiments, the response to the performance monitoring request includes a reply or an indication for the performance monitoring request.

In some embodiments, the transmitting module 1501 is configured to:
transmit the performance monitoring request to the network device based on a scheduling request SR in uplink control information UCI; or
transmit the performance monitoring request to the network device based on medium access control control element MAC-CE signaling; or
transmit the performance monitoring request to the network device based on a reserved periodic physical uplink control channel PUCCH resource or physical uplink shared channel PUSCH resource.

FIG. 16 is a structural schematic diagram of another performance monitoring apparatus provided by an embodiment of the present disclosure. Referring to FIG. 16, a performance monitoring apparatus 1600 includes a receiving module 1601 and a transmitting module 1602, where:
the receiving module 1601 is configured to receive a performance monitoring request for an AI model transmitted by a terminal device, where the performance monitoring request is determined by the terminal device based on a trigger event;
the transmitting module 1602 is configured to transmit a response to the performance monitoring request to the terminal device.

In some embodiments, the transmitting module 1602 is configured to:
determine, according to information carried in the monitoring request, whether monitoring is required for the AI model, to obtain a determination result;
transmit the response to the monitoring request to the terminal device according to the determination result.

In some embodiments, the transmitting module 1602 is configured to:
determine, according to information carried in the performance monitoring request, whether performance monitoring is required for the AI model, to obtain a determination result;
transmit the response to the performance monitoring request to the terminal device according to the determination result.

In some embodiments, the transmitting module is configured to:
receive a scheduling request SR transmitted by the terminal device; and
transmit a response to the scheduling request SR to the terminal device, where the response to the scheduling request SR includes downlink control information DCI for uplink transmission resource allocation, and the DCI is scrambled based on a radio network temporary identifier RNTI of the terminal device.

It should be noted that the division of the units in the embodiments of the present disclosure is schematic and is merely a logical function division. In actual implementations, there may be another division manner. In addition, the functional units in the various embodiments of the present disclosure may be integrated into one processing unit, or various unit may be physically separated, or two or more units may be integrated into one unit. The above integrated units may be implemented in a form of hardware, or in a form of software functional units.

If the above integrated unit is implemented in the form of a software functional unit and sold or used as a separate product, it may be stored in a processor-readable storage medium. Based on such understanding, the technical solutions of the present disclosure essentially, or the part contributing to the related art, or all or part of the technical solutions may be embodied in the form of a software product. The computer software product is stored in a storage medium and includes several instructions for causing a computer device (which may be a personal computer, a server, or a network device, etc.) or a processor (processor) to execute all or part of the steps of the methods in the various embodiments of the present disclosure. The aforementioned storage medium includes: a USB flash drive, a mobile hard disk, a read-only memory (read-only memory, ROM), a random access memory (random access memory, RAM), a magnetic disk, or an optical disk, and other various media that can store program codes.

It should be noted here that the above apparatus provided by the present disclosure can implement all the method steps implemented by the method embodiments, and can achieve the same technical effects. The same parts and beneficial effects as those in the method embodiments will not be repeated here in this embodiment.

FIG. 17 is a structural schematic diagram of a terminal device provided by an embodiment of the present disclosure. Referring to FIG. 17, the terminal device includes a memory 1710, a transceiver 1720, and a processor 1730,
the memory 1710 is configured to store a computer program;
the transceiver 1720 is configured to transceive data under control of the processor;
the processor 1730 is configured to read the computer program in the memory and execute the following operations:
   transmitting a performance monitoring request for an AI model to a network device according to a trigger event; and
   receiving a response to the performance monitoring request transmitted by the network device, and performing performance monitoring on the AI model according to the response to the performance monitoring request.

In some embodiments, the performance monitoring request includes an identifier of the AI model and/or an identifier of a function.

In some embodiments, the performance monitoring request includes an identifier indicating an applicable model, an identifier indicating an applicable function, and an identifier indicating an applicable scenario corresponding to the performance monitoring request.

In some embodiments, the performance monitoring request includes a start time of performance monitoring and/or an end time of performance monitoring.

In some embodiments, the performance monitoring request includes target information, where the target information is related to a performance metric of the AI model and/or a metric value of the AI model.

In some embodiments, the target information includes at least one of the following:
an intermediate key performance indicator related to the AI model;
an eventual key performance indicator related to the AI model;
statistical information of information related to channel state information CSI;
distribution information of information related to CSI;
reference signal received power related to the AI model;
reference signal received quality related to the AI model;
a signal to interference plus noise ratio;
speed information; or
location information.

In some embodiments, the trigger event includes a first event related to the AI model and/or a function, and a second event related to performance of the terminal device.

In some embodiments, when the AI model is not activated, not selected, or not paired, the first event includes at least one of the following:
transmitting an identifier of a supported AI model and/or an identifier of a supported function; or
receiving an identifier of an AI model and/or an identifier of a function supported by a cell currently covered by a base station.

In some embodiments, when the AI model is activated, selected, or paired, the first event is an event determined based on at least one of the following:
a measured eventual key performance indicator;
statistical information and/or distribution information of information related to measured CSI;
statistical information and/or distribution information of information related to CSI inferred by the AI model;
a generalization indicator of the AI model;
update information and/or transfer information of the AI model.

In some embodiments, the first event is an event determined based on the measured eventual key performance indicator, and the first event includes at least one of the following:
a first parameter in the eventual key performance indicator being less than a threshold corresponding to the first parameter, where the first parameter is positively correlated with performance of the AI model;
a second parameter in the eventual key performance indicator being greater than a threshold corresponding to the second parameter, where the second parameter is negatively correlated with performance of the AI model;
the number of times a first parameter in the eventual key performance indicator is less than a threshold corresponding to the first parameter within a first duration being greater than a first threshold;
the number of times a second parameter in the eventual key performance indicator is greater than a threshold corresponding to the second parameter within a first duration being greater than a first threshold; or
a deviation between a parameter in the eventual key performance indicator and a first target value being greater than a second threshold, where the first target value is a target value corresponding to the parameter in the eventual key performance indicator.

In some embodiments, the first event is an event determined based on the statistical information and/or distribution information of information related to measured CSI, and the first event includes at least one of the following:
a third parameter in the statistical information and/or distribution information of information related to measured CSI being greater than a threshold corresponding to the third parameter, where the third parameter is negatively correlated with performance of the AI model;
a fourth parameter in the statistical information and/or distribution information of information related to measured CSI being less than a threshold corresponding to the fourth parameter, where the fourth parameter is positively correlated with performance of the AI model;
the number of times a third parameter in the statistical information and/or distribution information of information related to measured CSI is greater than a threshold corresponding to the third parameter within a second duration being greater than a third threshold;
the number of times a fourth parameter in the statistical information and/or distribution information of information related to measured CSI is less than a threshold corresponding to the fourth parameter within a second duration being greater than a third threshold; or
a deviation between a parameter in the statistical information and/or distribution information of information related to measured CSI and a second target value being greater than a fourth threshold, where the second target value is a target value corresponding to the parameter in the statistical information and/or distribution information of information related to measured CSI.

In some embodiments, the first event is an event determined based on the statistical information and/or distribution information of information related to CSI inferred by the AI model, and the first event includes at least one of the following:
a fifth parameter in the statistical information and/or distribution information of information related to inferred CSI being greater than a threshold corresponding to the fifth parameter, where the fifth parameter is negatively correlated with performance of the AI model;
a sixth parameter in the statistical information and/or distribution information of information related to inferred CSI being less than a threshold corresponding to the sixth parameter, where the sixth parameter is positively correlated with performance of the AI model;
the number of times a fifth parameter in the statistical information and/or distribution information of information related to inferred CSI is greater than a threshold corresponding to the fifth parameter within a third duration being greater than a fifth threshold;
the number of times a sixth parameter in the statistical information and/or distribution information of information related to inferred CSI is less than a threshold corresponding to the sixth parameter within a third duration being greater than a fifth threshold; or
a deviation between a parameter in the statistical information and/or distribution information of information related to inferred CSI and a third target value being greater than a sixth threshold, where the third target value is a target value corresponding to the parameter in the statistical information and/or distribution information of information related to inferred CSI.

In some embodiments, the first event is an event determined based on the generalization indicator of the AI model, and the first event includes at least one of the following:
a duration in which a parameter in a performance indicator of a received reference signal is less than a seventh threshold being greater than an eighth threshold;
the number of times a parameter in a performance indicator of a received reference signal is less than a seventh threshold within a fourth duration being greater than a ninth threshold;
quasi-co-location information of a received reference signal changing;
a dataset label of information related to measured CSI changing;
a duration in which a parameter in measured speed information is greater than a tenth threshold being greater than an eleventh threshold;
the number of times a parameter in measured speed information is greater than a tenth threshold within a fifth duration being greater than a twelfth threshold;
a distance difference between two positions measured at an interval of a sixth duration being greater than a thirteenth threshold; or
an operating center frequency, a subcarrier, and/or a bandwidth configuration changing.

In some embodiments, the first event is an event determined based on update information and/or model transfer information of the AI model, and the first event includes at least one of the following:
receiving model update information and/or model transfer information transmitted by the network device; or
not receiving an indication related to performance monitoring within a seventh duration after receiving the model update information and/or the model transfer information transmitted by the network device.

In some embodiments, the second event is an event determined based on upper layer signaling, and the second event includes at least one of the following:
a handover of a cell where the terminal device is located occurring;
a first monitoring quantity being greater than a fourteenth threshold, where the first monitoring quantity is negatively correlated with the performance of the terminal device;
a second monitoring quantity being less than a fifteenth threshold, where the second monitoring quantity is positively correlated with the performance of the terminal device;
a first parameter of an eventual key performance indicator at a future time predicted based on an eventual key performance indicator at a current time being less than a threshold corresponding to the first parameter; or
a second parameter of an eventual key performance indicator at a future time predicted based on an eventual key performance indicator at a current time being greater than a threshold corresponding to the second parameter.

In some embodiments, the threshold, duration, and target value are obtained based on a protocol pre-definition and/or a network side configuration and/or a combination of a protocol pre-definition and a network side configuration.

In some embodiments, the information related to CSI includes CSI information, beam information, and positioning information.

In some embodiments, the response to the performance monitoring request includes a reply or an indication for the performance monitoring request.

In some embodiments, the transmitting the performance monitoring request for the AI model to the network device includes:
transmitting the performance monitoring request to the network device based on a scheduling request SR in uplink control information UCI; or
transmitting the performance monitoring request to the network device based on a medium access control control element MAC-CE signaling; or
transmitting the performance monitoring request to the network device based on a reserved periodic physical uplink control channel PUCCH resource or physical uplink shared channel PUSCH resource.

In some embodiments, the terminal device may further include a user interface 1740. For different terminal devices, the user interface 1740 may also be an interface capable of externally or internally connecting to required devices, and the connected devices include but are not limited to keypads, displays, speakers, microphones, joysticks, etc.

In FIG. 17, a bus architecture may include any number of interconnected buses and bridges, and specifically links together various circuits of one or more processors represented by the processor 1703 and a memory represented by the memory 1710. The bus architecture may also link together various other circuits such as peripheral devices, voltage regulators, and power management circuits, all of which are well known in the art, and therefore will not be further described herein. A bus interface provides an interface. The transceiver 1720 may be a plurality of elements, i.e., includes a transmitter and a receiver, and provides a unit for communicating with various other apparatuses over transmission media including wireless channels, wired channels, optical cables and the like. The processor 1730 is responsible for managing the bus architecture and general processing, and the memory 1701 may store data used by the processor 1730 when performing operations.

Optionally, the processor 1730 may be a central processing unit (Central Processing Unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also adopt a multi-core architecture.

The processor 1730 is configured to execute any one of the methods provided by the embodiments of the present disclosure according to the obtained executable instructions by calling the computer program stored in the memory 1710. The processor 1730 and the memory 1710 may also be physically separated.

It should be noted here that the above physical devices provided by the present disclosure can implement all the method steps implemented by the physical devices in the method embodiments, and can achieve the same technical effects. The same parts and beneficial effects as those in the method embodiments will not be repeated here in this embodiment.

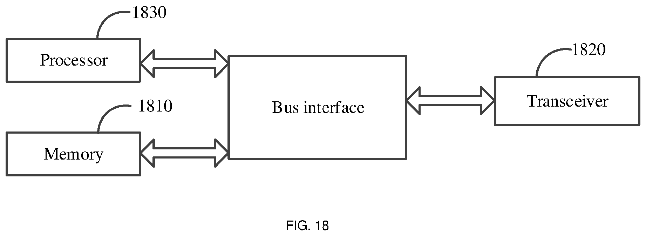

FIG. 18 is a structural schematic diagram of a network device provided by an embodiment of the present disclosure. Referring to FIG. 18, the network device includes a memory 1810, a transceiver 1820, and a processor 1830,
the memory 1810 is configured to store a computer program;
the transceiver 1820 is configured to transceive data under control of the processor;
the processor 1830 is configured to read the computer program in the memory and execute the following operations:
   receiving a performance monitoring request for an AI model transmitted by a terminal device, where the performance monitoring request is determined by the terminal device based on a trigger event; and
   transmitting a response to the performance monitoring request to the terminal device.

In some embodiments, the transmitting the response to the performance monitoring request to the terminal device includes:
determining, according to information carried in the performance monitoring request, whether performance monitoring is required for the AI model, to obtain a determination result; and
transmitting the response to the performance monitoring request to the terminal device according to the determination result.

In some embodiments, the transmitting the response to the performance monitoring request to the terminal device includes:
receiving a scheduling request SR transmitted by the terminal device; and
transmitting a response to the scheduling request SR to the terminal device, where the response to the scheduling request SR comprises downlink control information DCI for allocating an uplink transmission resource, and the DCI is scrambled based on a radio network temporary identifier RNTI of the terminal device.

In FIG. 18, a bus architecture may include any number of interconnected buses and bridges, and specifically links together various circuits of one or more processors represented by the processor 1830 and a memory represented by the memory 1810. The bus architecture may also link together various other circuits such as peripheral devices, voltage regulators, and power management circuits, all of which are well known in the art, and therefore will not be further described herein. A bus interface provides an interface. The transceiver 1820 may be a plurality of elements, i.e., includes a transmitter and a receiver, and provides a unit for communicating with various other apparatuses over transmission media including wireless channels, wired channels, optical cables and the like. The processor 1830 is responsible for managing the bus architecture and general processing, and the memory 1810 may store data used by the processor 1830 when performing operations.

Optionally, the processor 1830 may be a central processing unit (Central Processing Unit, CPU), an application specific integrated circuit (Application Specific Integrated Circuit, ASIC), a field-programmable gate array (Field-Programmable Gate Array, FPGA), or a complex programmable logic device (Complex Programmable Logic Device, CPLD), and the processor may also adopt a multi-core architecture.

It should be noted here that the above physical devices provided by the present disclosure can implement all the method steps implemented by the physical devices in the method embodiments, and can achieve the same technical effects. The same parts and beneficial effects as those in the method embodiments will not be repeated here in this embodiment.

The embodiments of the present disclosure also provide a processor-readable storage medium, where the processor-readable storage medium stores a computer program, and the computer program is used for causing a processor to execute any method described in the above method embodiments.

The processor-readable storage medium may be any available medium or data storage device accessible by a computer, including but not limited to a magnetic memory (such as a floppy disk, a hard disk, a magnetic tape, a magneto-optical disk (MO), etc.), an optical memory (such as a CD, a DVD, a BD, a HVD, etc.), and a semiconductor memory (such as a ROM, an EPROM, an EEPROM, a non-volatile memory (NAND FLASH), a solid state disk (SSD)), etc.

The embodiments of the present disclosure also provide a computer program product, including a computer program, where the computer program, when executed by a processor, implements the method of any one of the above method embodiments.

Those skilled in the art shall understand that, the embodiments of the present disclosure can be provided as a method, a system or a computer program product. Therefore, the present disclosure may adopt the form of an entirely hardware embodiment, an entirely software embodiment or an embodiment combining software and hardware. Furthermore, the present disclosure may adopt the form of a computer program product implemented on one or more computer-usable storage media (including but not limited to a disk memory, an optical memory, and the like) including computer-usable program codes.

The present disclosure is described with reference to the flowcharts and/or block diagrams of the methods, the devices (systems) and the computer program products according to the embodiments of the present disclosure. It should be understood that, each process and/or block in the flowcharts and/or block diagrams and combinations of processes and/or blocks in the flowcharts and/or block diagrams can be implemented by computer-executable instructions. The computer-executable instructions may be provided to a processor of a general-purpose computer, a special-purpose computer, an embedded processor or other programmable data processing devices to produce a machine, which enables instructions executed by a processor of a computer or other programmable data processing devices to generate an apparatus for implementing functions specified in one or more processes in the flowcharts and/or one or more blocks in the block diagrams.

These processor-executable instructions may also be stored in a processor-readable memory that can direct a computer or other programmable data processing devices to operate in a particular manner, so that the instructions stored in the processor-readable memory generate an article of manufacture including an instruction apparatus. The instruction apparatus implements functions specified in one or more processes in the flowcharts and/or one or more blocks in the block diagrams.

Such processor-executable instructions may also be loaded into a computer or other programmable data processing devices, so that a series of operational steps are executed on the computer or other programmable devices to generate computer-implemented processes. Accordingly, the instructions executed on the computer or other programmable devices provide steps for implementing the functions specified in one or more processes in the flowcharts and/or one or more blocks in the block diagrams.

Obviously, those skilled in the art can make various modifications and variations to the present disclosure without departing from the spirit and scope of the present disclosure. As such, if these modifications and variations of the present disclosure belong to the scope of the claims of the present disclosure and their equivalents, the present disclosure is intended to include these modifications and variations.

## Claims

1. A performance monitoring method, applied to a terminal device, and the method comprises:
transmitting a performance monitoring request for an AI model to a network device according to a trigger event; and
receiving a response to the performance monitoring request transmitted by the network device, and performing performance monitoring on the AI model according to the response to the performance monitoring request.

2. The method according to claim 1, wherein the performance monitoring request comprises an identifier of the AI model and/or an identifier of a function.

3. The method according to claim 1 or 2, wherein the performance monitoring request comprises an identifier indicating an applicable model, an identifier indicating an applicable function, and an identifier indicating an applicable scenario corresponding to the performance monitoring request.

4. The method according to any one of claims 1 to 3, wherein the performance monitoring request comprises a start time of performance monitoring and/or an end time of performance monitoring.

5. The method according to any one of claims 1 to 4, wherein the performance monitoring request comprises target information, wherein the target information is related to a performance metric of the AI model and/or a metric value of the AI model.

6. The method according to claim 5, wherein the target information comprises at least one of the following:
an intermediate key performance indicator related to the AI model;
an eventual key performance indicator related to the AI model;
statistical information of information related to channel state information CSI;
distribution information of information related to CSI;
reference signal received power related to the AI model;
reference signal received quality related to the AI model;
a signal to interference plus noise ratio;
speed information; or
location information.

7. The method according to any one of claims 1 to 6, wherein the trigger event comprises a first event related to the AI model and/or a function, and a second event related to performance of the terminal device.

8. The method according to claim 7, wherein when the AI model is not activated, not selected, or not paired, the first event comprises at least one of the following:
transmitting an identifier of a supported AI model and/or an identifier of a supported function; or
receiving an identifier of an AI model and/or an identifier of a function supported by a cell currently covered by a base station.

9. The method according to claim 7, wherein when the AI model is activated, selected, or paired, the first event is an event determined based on at least one of the following:
a measured eventual key performance indicator;
statistical information and/or distribution information of information related to measured CSI;
statistical information and/or distribution information of information related to CSI inferred by the AI model;
a generalization indicator of the AI model; or
update information and/or transfer information of the AI model.

10. The method according to claim 9, wherein the first event is an event determined based on the measured eventual key performance indicator, and the first event comprises at least one of the following:
a first parameter in the eventual key performance indicator being less than a threshold corresponding to the first parameter, wherein the first parameter is positively correlated with performance of the AI model;
a second parameter in the eventual key performance indicator being greater than a threshold corresponding to the second parameter, wherein the second parameter is negatively correlated with performance of the AI model;
a number of times a first parameter in the eventual key performance indicator is less than a threshold corresponding to the first parameter within a first duration being greater than a first threshold;
a number of times a second parameter in the eventual key performance indicator is greater than a threshold corresponding to the second parameter within a first duration being greater than a first threshold; or
a deviation between a parameter in the eventual key performance indicator and a first target value being greater than a second threshold, wherein the first target value is a target value corresponding to the parameter in the eventual key performance indicator.

11. The method according to claim 9, wherein the first event is an event determined based on the statistical information and/or distribution information of information related to measured CSI, and the first event comprises at least one of the following:
a third parameter in the statistical information and/or distribution information of information related to measured CSI being greater than a threshold corresponding to the third parameter, wherein the third parameter is negatively correlated with performance of the AI model;
a fourth parameter in the statistical information and/or distribution information of information related to measured CSI being less than a threshold corresponding to the fourth parameter, wherein the fourth parameter is positively correlated with performance of the AI model;
a number of times a third parameter in the statistical information and/or distribution information of information related to measured CSI is greater than a threshold corresponding to the third parameter within a second duration being greater than a third threshold;
a number of times a fourth parameter in the statistical information and/or distribution information of information related to measured CSI is less than a threshold corresponding to the fourth parameter within a second duration being greater than a third threshold; or
a deviation between a parameter in the statistical information and/or distribution information of information related to measured CSI and a second target value being greater than a fourth threshold, wherein the second target value is a target value corresponding to the parameter in the statistical information and/or distribution information of information related to measured CSI.

12. The method according to claim 9, wherein the first event is an event determined based on the statistical information and/or distribution information of information related to CSI inferred by the AI model, and the first event comprises at least one of the following:
a fifth parameter in the statistical information and/or distribution information of information related to inferred CSI being greater than a threshold corresponding to the fifth parameter, wherein the fifth parameter is negatively correlated with performance of the AI model;
a sixth parameter in the statistical information and/or distribution information of information related to inferred CSI being less than a threshold corresponding to the sixth parameter, wherein the sixth parameter is positively correlated with performance of the AI model;
a number of times a fifth parameter in the statistical information and/or distribution information of information related to inferred CSI is greater than a threshold corresponding to the fifth parameter within a third duration being greater than a fifth threshold;
a number of times a sixth parameter in the statistical information and/or distribution information of information related to inferred CSI is less than a threshold corresponding to the sixth parameter within a third duration being greater than a fifth threshold; or
a deviation between a parameter in the statistical information and/or distribution information of information related to inferred CSI and a third target value being greater than a sixth threshold, wherein the third target value is a target value corresponding to the parameter in the statistical information and/or distribution information of information related to inferred CSI.

13. The method according to claim 9, wherein the first event is an event determined based on the generalization indicator of the AI model, and the first event comprises at least one of the following:
a duration in which a parameter in a performance indicator of a received reference signal is less than a seventh threshold being greater than an eighth threshold;
a number of times a parameter in a performance indicator of a received reference signal is less than a seventh threshold within a fourth duration being greater than a ninth threshold;
quasi-co-location information of a received reference signal changing;
a dataset label of information related to measured CSI changing;
a duration in which a parameter in measured speed information is greater than a tenth threshold being greater than an eleventh threshold;
a number of times a parameter in measured speed information is greater than a tenth threshold within a fifth duration being greater than a twelfth threshold;
a distance difference between two positions measured at an interval of a sixth duration being greater than a thirteenth threshold; or
an operating center frequency, a subcarrier, and/or a bandwidth configuration changing.

14. The method according to claim 9, wherein the first event is an event determined based on the update information and/or model transfer information of the AI model, and the first event comprises at least one of the following:
receiving model update information and/or model transfer information transmitted by the network device; or
not receiving an indication related to performance monitoring within a seventh duration after receiving the model update information and/or the model transfer information transmitted by the network device.

15. The method according to any one of claims 7 to 14, wherein the second event is an event determined based on upper layer signaling, and the second event comprises at least one of the following:
a handover of a cell where the terminal device is located occurring;
a first monitoring quantity being greater than a fourteenth threshold, wherein the first monitoring quantity is negatively correlated with the performance of the terminal device;
a second monitoring quantity being less than a fifteenth threshold, wherein the second monitoring quantity is positively correlated with the performance of the terminal device;
a first parameter of an eventual key performance indicator at a future time predicted based on an eventual key performance indicator at a current time being less than a threshold corresponding to the first parameter; or
a second parameter of an eventual key performance indicator at a future time predicted based on an eventual key performance indicator at a current time being greater than a threshold corresponding to the second parameter.

16. The method according to any one of claims 10 to 14, wherein the threshold, duration, and target value are obtained based on a protocol pre-definition and/or a network side configuration and/or a combination of a protocol pre-definition and a network side configuration.

17. The method according to any one of claims 1 to 16, wherein the information related to CSI comprises CSI information, beam information, and positioning information.

18. The method according to any one of claims 1 to 17, wherein the response to the performance monitoring request comprises a reply or an indication for the performance monitoring request.

19. The method according to any one of claims 1 to 18, wherein the transmitting the performance monitoring request for the AI model to the network device comprises:
transmitting the performance monitoring request to the network device based on a scheduling request SR in uplink control information UCI; or
transmitting the performance monitoring request to the network device based on medium access control control element MAC-CE signaling; or
transmitting the performance monitoring request to the network device based on a reserved periodic physical uplink control channel PUCCH resource or a reserved periodic physical uplink shared channel PUSCH resource.

20. A performance monitoring method, applied to a network device, and the method comprises:
receiving a performance monitoring request for an AI model transmitted by a terminal device, wherein the performance monitoring request is determined by the terminal device based on a trigger event; and
transmitting a response to the performance monitoring request to the terminal device.

21. The method according to claim 20, wherein the transmitting the response to the performance monitoring request to the terminal device comprises:
determining, according to information carried in the performance monitoring request, whether performance monitoring is required for the AI model, to obtain a determination result; and
transmitting the response to the performance monitoring request to the terminal device according to the determination result.

22. The method according to claim 20 or 21, wherein the transmitting the response to the performance monitoring request to the terminal device comprises:
receiving a scheduling request SR transmitted by the terminal device; and
transmitting a response to the scheduling request SR to the terminal device, wherein the response to the scheduling request SR comprises downlink control information DCI for uplink transmission resource allocation, and the DCI is scrambled based on a radio network temporary identifier RNTI of the terminal device.

23. A performance monitoring apparatus, applied to a terminal device, the performance monitoring apparatus comprises a transmitting module, a receiving module, and a monitoring module, wherein:
the transmitting module is configured to transmit a performance monitoring request for an AI model to a network device according to a trigger event;
the receiving module is configured to receive a response to the performance monitoring request from the network device; and
the monitoring module is configured to perform performance monitoring on the AI model according to the response to the performance monitoring request.

24. A performance monitoring apparatus, applied to a network device, the performance monitoring apparatus comprises a receiving module and a transmitting module, wherein:
the receiving module is configured to receive a performance monitoring request for an AI model transmitted by a terminal device, wherein the performance monitoring request is determined by the terminal device based on a trigger event; and
the transmitting module is configured to transmit a response to the performance monitoring request to the terminal device.

25. A terminal device, comprising a memory, a transceiver, and a processor:
the memory is configured to store a computer program;
the transceiver is configured to transceive data under control of the processor;
the processor is configured to read the computer program in the memory and execute the following operations:
transmitting a performance monitoring request for an AI model to a network device according to a trigger event; and
receiving a response to the performance monitoring request transmitted by the network device, and performing performance monitoring on the AI model according to the response to the performance monitoring request.

26. A network device, comprising a memory, a transceiver, and a processor:
the memory is configured to store a computer program;
the transceiver is configured to transceive data under control of the processor;
the processor is configured to read the computer program in the memory and execute the following operations:
receiving a performance monitoring request for an AI model transmitted by a terminal device, wherein the performance monitoring request is determined by the terminal device based on a trigger event; and
transmitting a response to the performance monitoring request to the terminal device.

27. A processor-readable storage medium, wherein the processor-readable storage medium stores a computer program, and the computer program is used for causing a processor to execute the method of any one of claims 1 to 19 or execute the method of any one of claims 20 to 22.
